(19) Europäisches Patentamt / European Patent Office / Office européen des brevets

(11) **EP 3 017 273 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(21) Anmeldenummer: **14734810.6**

(22) Anmeldetag: **01.07.2014**

(51) Int Cl.:
***G01B 11/24*** *(2006.01)*

(86) Internationale Anmeldenummer:
**PCT/EP2014/063958**

(87) Internationale Veröffentlichungsnummer:
**WO 2015/000898 (08.01.2015 Gazette 2015/01)**

(54) **VERFAHREN UND VORRICHTUNG ZUR OPTISCHEN FORMERFASSUNG UND/ODER PRÜFUNG EINES GEGENSTANDES**

METHOD AND DEVICE FOR OPTICAL SHAPE RECOGNITION AND/OR EXAMINATION OF AN OBJECT

PROCÉDÉ ET DISPOSITIF DE DÉTECTION OPTIQUE DE LA FORME D'UN OBJET ET/OU DE CONTRÔLE OPTIQUE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2013 DE 102013212827**
**05.05.2014 DE 102014208356**

(43) Veröffentlichungstag der Anmeldung:
**11.05.2016 Patentblatt 2016/19**

(73) Patentinhaber: **SAC Sirius Advanced Cybernetics GmbH**
**76227 Karlsruhe (DE)**

(72) Erfinder:
• WAGNER, Christoph
75203 Königsbach-Stein (DE)
• KLUDT, Christian
76149 Karlsruhe (DE)

(74) Vertreter: **Kordel, Mattias et al**
**Gleiss Große Schrell und Partner mbB**
**Patentanwälte Rechtsanwälte**
**Leitzstrasse 45**
**70469 Stuttgart (DE)**

(56) Entgegenhaltungen:
WO-A1-02/23124          DE-A1- 19 726 094
DE-A1-102005 007 715    DE-A1-102005 031 957

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur optischen Formerfassung und/oder Prüfung eines Gegenstandes gemäß Anspruch 1 sowie eine Vorrichtung zur optischen Formerfassung und/oder Prüfung eines Gegenstandes gemäß Anspruch 6. Insbesondere sind das erfindungsgemäße Verfahren und die erfindungsgemäße Vorrichtung zur Formerfassung und/oder Prüfung von Gegenständen mit optisch rauer Oberfläche und/oder mit glänzender Oberfläche bis hin zu optisch glatter Oberfläche geeignet.

Vorrichtungen und Verfahren zur optischen Formerfassung von Gegenständen sind bekannt. Es gibt eine Vielzahl von Messprinzipien, mit denen auf optischem Weg die dreidimensionale Form von Gegenständen erfasst werden kann.

- Triangulation:

    Laserlichtschnittverfahren
    Streifenprojektion
    Stereoverfahren
    Photogrammmetrie
    Photometrisches Stereo und "shape from shading"
    Photometrische Deflektometrie
    andere deflektometrische Verfahren

- Interferometrische Verfahren:

    Laserinterferometrie
    Weißlichtinterferometrie
    Holografische Verfahren

- Laufzeitverfahren:
    Hochfrequente Modulation der Lichtquelle

Optisch raue Oberflächen sind dadurch definiert, dass sie eine Rauigkeit besitzen, die wesentlich höher ist als die Wellenlänge von sichtbarem Licht (etwa 0,5 Mikrometer), während optisch glatte Oberflächen eine Rauigkeit weit unter der Wellenlänge aufweisen. Aufgrund dieser Eigenschaft zeigen optisch raue Oberflächen eine ungerichtete, diffuse Streuung von Licht. Beispiele hierfür sind Papier, Kreide, Mattscheiben und andere mehr. Optisch glatte Oberflächen dagegen spiegeln bzw. transmittieren einfallendes Licht gerichtet. Sie sind in der Lage, ein optisches Abbild ihrer Umgebung zu erzeugen. Als Beispiele sind ebene oder gewölbte Spiegel und polierte Metall- und Glasoberflächen (Linsen) zu nennen.

Mit dem Begriff glänzend werden im Weiteren Oberflächen bezeichnet, deren optische Rauigkeit im Übergangsbereich zwischen optisch rauen und optisch glatten Oberflächen liegt.

Sowohl optisch raue, glänzende als auch optisch glatte Oberflächen haben technisch eine hohe Bedeutung.

Für optisch raue Oberflächen gibt es eine breite Palette von optischen 3D-Sensoren. Eines der am weitesten verbreiteten Verfahren beruht auf der Projektion von Streifenmustern. Die Muster werden aus einer Richtung projiziert und aus einer anderen mit einer Kamera beobachtet. Die Streifen scheinen für die Kamera, je nach Form des beobachteten Gegenstandes, mehr oder weniger deformiert. Aus der Deformation der Streifen kann auf die Form des Gegenstandes zurückgeschlossen werden.

Für glänzende Oberflächen ist insbesondere das Verfahren der photometrischen Deflektometrie geeignet (EP 1 567 827 A1).

Auch für optisch glatte Oberflächen sind Verfahren bekannt, die eine Formerfassung ermöglichen. Zum Test von einfachen Oberflächenformen wie ebenen oder sphärischen Flächen (Linsen, Spiegel etc.) kommen vorwiegend interferometrische Verfahren zum Einsatz. Bei komplizierter geformten Flächen wie Asphären kommen das Hartmann-Verfahren und der Shack-Hartmann-Test zum Einsatz. Hier beobachtet man die Ablenkung eines dünnen Strahlenbündels durch den zu vermessenden Gegenstand. Andere Verfahren beobachten ein Gitter- oder Streifenmuster, welches an der Gegenstandsoberfläche reflektiert bzw. transmittiert wird. Je nach deren Form erscheinen das Gitter bzw. die Streifen mehr oder weniger deformiert. Zur Analyse, inwieweit das Gittermuster deformiert wird, kann ein zweites Gitter bei der Beobachtung eingesetzt werden. Dort spricht man speziell von einem Moiree-Verfahren. Alle diese vorgenannten Verfahren lassen sich unter dem Stichpunkt der deflektometrischen Verfahren zusammenfassen. Ihnen ist gemeinsam, dass sie die Strahlablenkung bestimmen und daraus auf die Form der Oberfläche schließen. Die deflektometrischen Verfahren beruhen auf dem Reflexionsgesetz bzw. Brechungsgesetz, das den Zusammenhang zwischen einfallendem Strahl, Oberflächennormale und dem reflektierten bzw. transmittierten Strahl beschreibt.

Die Formerfassung und/oder Prüfung von optisch rauen, glänzenden und optisch glatten Gegenständen mit nur einer Vorrichtung bzw. einem Verfahren ist bislang nicht möglich. Ein technisch bedeutsames Beispiel ist die Kontrolle von lackierten Bauteilen im Automobilbau, insbesondere von lackierten Oberflächen der Karosserie. Je nach Art des Lacks treten dort von diffuser Streuung (optisch raue Oberfläche), über glänzende Anteile bis hin zu spiegelnden Anteilen auf.

DE 10 2005 007 715 A1 offenbart eine Vorrichtung zur Erfassung von Fehlstellen an einer sich vorbeibewegenden Gegenstandsoberfläche mit einer Kamera und zwei linienförmigen Beleuchtungselementen, die als Fluoreszenzröhren ausgebildet sind.

Der Erfindung liegt daher die Aufgabe zugrunde, ein Verfahren und eine Vorrichtung zu schaffen, welche gleichermaßen zur Formerfassung und/oder Prüfung von Gegenständen mit optisch rauer, glänzender oder optisch glatter Oberfläche geeignet sind. Insbesondere sind das Verfahren und die Vorrichtung geeignet für die technisch besonders relevanten glänzenden und optisch glatten Oberflächen.

Die Aufgabe wird gelöst, indem ein Verfahren mit den Schritten des Anspruchs 1 geschaffen wird. Hierbei werden mindestens eine Kamera, mindestens ein linienförmiges Beleuchtungselement und ein Gegenstand derart relativ zueinander angeordnet, dass eine Gegenstandsoberfläche, mithin eine Oberfläche des Gegenstands, von dem wenigstens einen Beleuchtungselement beleuchtbar und von der Kamera aufnehmbar ist. Es wird eine Relativbewegung zwischen wenigstens zwei Elementen bewirkt, wobei die Elemente ausgewählt sind aus einer Gruppe bestehend aus dem Gegenstand, dem wenigstens einen Beleuchtungselement und der Kamera. Dies bedeutet insbesondere, dass es möglich ist, eine Relativbewegung zu bewirken zwischen dem Gegenstand und dem wenigstens einen Beleuchtungselement, zwischen dem Gegenstand und der Kamera, zwischen dem wenigstens einen Beleuchtungselement und der Kamera, zwischen dem Gegenstand und einer festgehaltenen Anordnung aus dem wenigstens einen Beleuchtungselement und der Kamera, zwischen dem wenigstens einen Beleuchtungselement und einer festgehaltenen Anordnung aus dem Gegenstand und der Kamera, zwischen der Kamera und einer festgehaltenen Anordnung aus dem Gegenstand und dem wenigstens einen Beleuchtungselement, oder derart, dass alle drei Elemente, nämlich der Gegenstand, das wenigstens eine Beleuchtungselement und die Kamera, relativ zueinander bewegt werden. Eine Bewegungsrichtung der Relativbewegung schließt mit dem wenigstens einen Beleuchtungselement einen Winkel ein, der von 0° verschieden ist. Es wird eine Bildfolge der Gegenstandsoberfläche mit der Kamera während der Relativbewegung aufgenommen. Dabei wird die Gegenstandsoberfläche in einer Bildebene der Kamera abgebildet. Während der Belichtung der Bildebene wird die Gegenstandsoberfläche durch das wenigstens eine Beleuchtungselement beleuchtet. Die aufgenommene Bildfolge wird in Hinblick auf lokale Oberflächenneigungen und/oder lokale optische Eigenschaften der Gegenstandsoberfläche, insbesondere deren Streueigenschaften, ausgewertet.

Diese Auswertung wird bevorzugt durchgeführt, indem Bildorte maximaler Beleuchtungsstärke in der Bildebene Gegenstandsorten auf der Gegenstandsoberfläche zugeordnet werden, die in der Bildfolge unterscheidbar sind. Die Bildorte maximaler Beleuchtungsstärke korrespondieren mit den ihnen zugeordneten Gegenstandsorten einerseits durch die Abbildung, die durch die Kamera vermittelt wird, und zum anderen durch die Zuordnung, indem jedem betrachteten Gegenstandsort ein Bildort maximaler Beleuchtungsstärke zugeordnet wird. Für jeden betrachteten Gegenstandsort wird bevorzugt eine lokale Oberflächenneigung aus der Position des korrespondieren Bildortes in der Bildebene berechnet.

Es zeigt sich, dass es im Rahmen des Verfahrens bereits bei Verwendung von nur einem Beleuchtungselement möglich ist, Informationen über die Oberflächenneigung eines Gegenstands in einer Richtung zu erhalten. Außerdem ist ein Beleuchtungselement prinzipiell ausreichend, um Informationen über lokale optische Eigenschaften, insbesondere Streueigenschaften, zu erhalten und insbesondere hieraus Oberflächendefekte wie beispielsweise Kratzer oder lokale Deformationen der Oberfläche detektieren zu können. Werden wenigstens zwei Beleuchtungselemente verwendet, ist es möglich, Informationen bezüglich der Oberflächenneigung in zwei Richtungen zu erhalten.

Die Aufgabe wird auch gelöst, indem ein Verfahren mit den folgenden Schritten geschaffen wird: Es werden mindestens eine Kamera, mindestens zwei linienförmige Beleuchtungselemente und ein Gegenstand derart relativ zueinander angeordnet, dass eine Gegenstandsoberfläche, mithin eine Oberfläche des Gegenstands, von den Beleuchtungselementen beleuchtbar und von der Kamera aufnehmbar ist. Die Beleuchtungselemente schließen miteinander einen Winkel ein, der von 0° verschieden ist. Es wird eine Relativbewegung zwischen wenigstens zwei Elementen bewirkt, wobei die Elemente ausgewählt sind aus einer Gruppe bestehend aus dem Gegenstand, den Beleuchtungselementen und der Kamera. Dies bedeutet insbesondere, dass es möglich ist, eine Relativbewegung zu bewirken zwischen dem Gegenstand und den Beleuchtungselementen, zwischen dem Gegenstand und der Kamera, zwischen den Beleuchtungselementen und der Kamera, zwischen dem Gegenstand und einer festgehaltenen Anordnung aus den Beleuchtungselementen und der Kamera, zwischen den Beleuchtungselementen und einer festgehaltenen Anordnung aus dem Gegenstand und der Kamera, zwischen der Kamera und einer festgehaltenen Anordnung aus dem Gegenstand und den Beleuchtungselementen, oder derart, dass alle drei Elemente, nämlich der Gegenstand, die Beleuchtungselemente und die Kamera, relativ zueinander bewegt werden. Eine Bewegungsrichtung der Relativbewegung schließt mit wenigstens einem Beleuchtungselement einen Winkel ein, der von 0° verschieden ist. Es wird eine Bildfolge der Gegenstandsoberfläche mit der Kamera während der Relativbewegung aufgenommen. Dabei wird die Gegenstandsoberfläche in einer Bildebene der Kamera abgebildet. Während der Belichtung der Bildebene wird die Gegenstandsoberfläche durch wenigstens eines der Beleuchtungselemente beleuchtet. Die aufgenommene Bildfolge wird in Hinblick auf lokale Oberflächenneigungen und/oder lokale optische Eigenschaften der Gegenstandsoberfläche, insbesondere deren Streueigenschaften, ausgewertet.

Diese Auswertung wird bevorzugt durchgeführt, indem Bildorte maximaler Beleuchtungsstärke in der Bildebene Gegenstandsorten auf der Gegenstandsoberfläche zugeordnet werden, die in der Bildfolge unterscheidbar sind. Die Bildorte maximaler Beleuchtungsstärke korrespondieren mit den ihnen zugeordneten Gegenstandsorten einerseits durch die Abbildung, die durch die Kamera vermittelt wird, und zum anderen durch die Zuordnung, indem jedem betrachteten Gegenstandsort ein Bildort maximaler Beleuchtungsstärke zugeordnet wird. Für jeden betrachteten Gegenstandsort wird bevorzugt eine lokale Oberflächneigung aus der Position des korrespondierenden Bildortes in der Bildebene berechnet.

Es wird insbesondere eine Ausführungsform des Verfahrens bevorzugt, bei welcher genau ein und nur ein linienförmiges Beleuchtungselement verwendet wird. Hierbei ist es insbesondere möglich, Informationen über eine Oberflächneigung des Gegenstands in einer Richtung sowie Informationen über lokale optische Eigenschaften, insbesondere Streueigenschaften, zu erhalten und insbesondere hieraus Oberflächendefekte, beispielsweise Kratzer oder lokale Deformationen der Oberfläche, detektieren zu können. Es wird insbesondere auch eine alternative Ausführungsform des Verfahrens bevorzugt, bei welcher genau zwei und nur zwei linienförmige Beleuchtungselemente verwendet werden. In diesem Fall ist es möglich, Informationen über eine Oberflächneigung des Gegenstands in zwei Richtungen zu erhalten. Selbstverständlich können auch bei Verwendung von zwei linienförmigen Beleuchtungselementen Informationen über Oberflächendefekte, beispielsweise Kratzer oder lokale Deformationen der Oberfläche, insbesondere aus deren lokalen Streueigenschaften, erhalten werden.

Mithilfe des Verfahrens ist es möglich, optisch raue Gegenstandsoberflächen, optisch glänzende Gegenstandsoberflächen und/oder optisch glatte Gegenstandsoberflächen in Hinblick auf ihre Form zu erfassen und/oder zu prüfen. Insbesondere ist es mithilfe des Verfahrens möglich, auch vollständig diffus streuende Gegenstandsoberflächen bezüglich ihrer Form zu erfassen und/oder zu prüfen. Dies ist insbesondere möglich, weil im Rahmen des Verfahrens mindestens ein linienförmiges Beleuchtungselement eingesetzt wird. Daher ist stets eine genaue Kenntnis der Beleuchtungsrichtung zumindest in einer Dimension möglich, was bei einer Flächenbeleuchtung beziehungsweise beim Einsatz flächenförmiger Beleuchtungselemente nicht möglich ist. Aufgrund der Relativbewegung, die im Rahmen des Verfahrens bewirkt wird, sind Winkelbereiche eines Halbraums oberhalb der Gegenstandsoberfläche - in Richtung auf die mindestens eine Kamera gesehen - erfassbar.

Das Verfahren ist auch für Gegenstandsoberflächen geeignet, welche Mehrfachreflexionen aufweisen beziehungsweise erzeugen, wie dies beispielsweise bei Gegenständen wie Linsen, insbesondere optische Linsen, beispielsweise für Brillen, Objektiven oder anderen optischen Vorrichtungen der Fall ist.

Die Linienform der Beleuchtungselemente bedeutet, dass diese im Wesentlichen eindimensional in dem Sinne ausgebildet sind, dass sie sich im Wesentlichen entlang einer einzigen Richtung - nämlich ihrer Längsrichtung - erstrecken. Dabei ist es möglich, dass ein linienförmiges Beleuchtungselement eine Mehrzahl, insbesondere eine Vielzahl entlang einer Linie nebeneinander angeordneter Beleuchtungsteilelemente umfasst. Es ist möglich, dass die Beleuchtungsteilelemente als Leuchtdioden (LED) oder als organische Leuchtdioden (OLED) ausgebildet sind. Alternativ oder zusätzlich ist es möglich, dass Beleuchtungsteilelemente als Laserlichtquellen ausgebildet sind. Es ist auch möglich, dass wenigstens eine Kaltlichtquelle als Beleuchtungselement und/oder als Beleuchtungsteilelement vorgesehen ist. Auch andere geeignete Lichtquellen sind möglich, insbesondere pulsbare Lichtquellen, die schnell schaltbar sind. Wenigstens ein Beleuchtungselement kann auch wenigstens eine lichtleitende Fasern oder wenigstens ein Faserbündel aufweisen. Es ist auch bevorzugt möglich, dass wenigstens ein Beleuchtungselement wenigstens eine lichtleitende Faser oder wenigstens ein Faserbündel aufweist, welches sich entlang der linearen Erstreckung des Beleuchtungselements erstreckt, wobei eine seitliche Abstrahlung von Licht entlang des Umfangs der Faser oder des Faserbündels vorgesehen ist. Dabei wird das Licht einer Lichtquelle vorzugsweise an einem oder auch an beiden Enden der Faser oder des Faserbündels eingekoppelt. Durch Streuung oder andere optische Effekte verlässt Licht die Faser oder das Faserbündel an ihrem/seinem Umfang. Vorzugsweise weist die Faser oder das Faserbündel einen kreisförmigen Querschnitt auf, es sind aber auch andere Querschnittsformen möglich. Die Faser oder das Faserbündel wird vorzugsweise entlang des gewünschten Verlaufs des linienförmigen Beleuchtungselements verlegt. Dabei ist es möglich, die Leuchtdichte des Beleuchtungselements mit Hilfe der einkoppelnden Lichtquelle zu steuern. Es ist möglich, dass ein Beleuchtungselement mehrere nebeneinanderangeordnete Beleuchtungslinien aufweist. Dabei können beispielsweise mehrere nebeneinander angeordnete Linien verschiedene Leuchtdichten aufweisen. Auf diese Weise ist es im Rahmen des Verfahrens auch möglich, ein Beleuchtungsprofil mit einer definierten Struktur, insbesondere mit einer einhüllenden Leuchtdichtefunktion, zu realisieren.

Sind mehrere Beleuchtungsteilelemente entlang einer Linie nebeneinander benachbart angeordnet, um ein Beleuchtungselement auszubilden, können diese einen Abstand zueinander aufweisen, also nichtbündig zueinander angeordnet sein, oder aber alternativ auch bündig aneinander anschließen, so dass entlang der Linienform des Beleuchtungselements keine Unterbrechungen der leuchtenden Linie entsteht. Wie zuvor bereits angesprochen ist es möglich, beispielsweise Leuchtdioden als Beleuchtungsteilelemente entlang einer Linie anzuordnen. Dabei ist es möglich, solche linienförmigen Anordnungen an einer biegsamen, linienförmigen Kontaktierungsschicht anzuordnen, was auch als "LED Stripe" bezeichnet wird. Dabei ist sowohl eine bündige als auch eine nichtbündige Anordnung möglich.

Es ist auch möglich, dass die Leuchtdichte entlang der Linienform des Beleuchtungselements mit Hilfe geeigneter optischer Elemente ausgeglichen und/oder homogenisiert wird, wobei insbesondere Unterbrechungen nicht bündig aneinander angeordneter Beleuchtungsteilelemente ausgeglichen werden können, so dass insgesamt ein homogener Leuchtdichteverlauf entlang der Linienform entsteht. Solche optischen Elemente oder Streuelemente können beispielsweise aus streuenden Materialien bestehen, die in einem Abstand zu den eigentlichen Lichtquellen, mithin zu den Beleuchtungsteilelementen, angeordnet sind.

Im Vergleich zu einer Flächenbeleuchtung ist ein linienförmiges Beleuchtungselement auch deswegen vorteilhaft, weil eine Helligkeit desselben vergleichsweise groß sein kann. Insbesondere ist es möglich, eine Leuchtdichte eines linienförmigen Beleuchtungselements sehr groß und insbesondere sehr viel größer als bei einer Flächenbeleuchtung zu wählen, weil die hierfür nötige Leistung aufgrund der Linienform sehr viel geringer ist als bei einer flächig ausgedehnten Beleuchtung. Weiterhin ist es möglich, ein linienförmiges Beleuchtungselement sehr rasch zu aktivieren und über eine sehr kurze Zeit aktiviert zu halten, wobei es insbesondere möglich ist, das linienförmige Beleuchtungselement blitzartig zu schalten. Dies ist mit einer flächigen Beleuchtung kaum, nicht in gleichem Ausmaß, oder nur mit sehr viel höherem Aufwand möglich. Insbesondere sind bei einem linienförmigen Beleuchtungselement in der Regel schnellere Wiederholraten möglich als bei einem flächigen Beleuchtungselement.

Der Winkel, den die wenigstens zwei Beleuchtungselemente miteinander einschließen, ist der Winkel, den zwei gedachte Linien, die sich jeweils in Längsrichtung der linienförmigen Beleuchtungselemente erstrecken, miteinander einschließen. Sind die Beleuchtungselemente in einer Ebene angeordnet, ist somit offensichtlich, wie der Winkel zu bestimmen ist. Es ist allerdings auch möglich, dass die Beleuchtungselemente windschief zueinander angeordnet sind. In diesem Fall wird der Winkel vorzugsweise anhand einer Projektion der beiden sich jeweils in Längsrichtung der Beleuchtungselemente erstreckenden Linien in eine gemeinsame Ebene - vorzugsweise in eine zu der Gegenstandsoberfläche oder zu der Bildebene parallele Ebene - bestimmt. Jedenfalls schließt die Forderung, dass die Beleuchtungselemente einen Winkel miteinander einschließen, der von 0° verschieden ist, aus, dass diese parallel zueinander orientiert sind. Insbesondere wird der Winkel, den die Beleuchtungselemente miteinander einschließen, bevorzugt in einer Ebene gemessen, zu der die Bewegungsrichtung parallel orientiert ist oder die parallel zu einer Ebene ausgerichtet ist, in der die Bewegungsrichtung liegt. Dabei ist es möglich, dass die Beleuchtungselemente selbst in der Ebene angeordnet sind, es ist aber auch möglich, dass der Winkel anhand einer Projektion der Beleuchtungselemente in diese Ebene bestimmt wird. Im Fall gekrümmter Beleuchtungselemente wird der Winkel als Winkel zwischen Tangenten an die Beleuchtungselemente - vorzugsweise in einem Kreuzungspunkt der Beleuchtungselemente oder deren Projektion - bestimmt.

Die Relativbewegung kann auf verschiedene Weisen bewirkt werden: Bei einer bevorzugten Ausführungsform des Verfahrens ist es möglich, dass eine translatorische Relativbewegung zwischen zumindest zwei der genannten Elemente bewirkt wird. Besonders bevorzugt wird eine lineare Bewegung entlang einer Gerade bewirkt, wobei die Bewegungsrichtung zu jedem Zeitpunkt durch einen konstanten Vektor beschrieben werden kann, sodass auch der Winkel, den die Bewegungsrichtung mit wenigstens einem Beleuchtungselement einschließt, zu jedem Zeitpunkt konstant ist. Bei einem anderen Ausführungsbeispiel ist es möglich, dass die Relativbewegung als rotatorische Bewegung bewirkt wird. Insbesondere bei einem rotationssymmetrischen Gegenstand ist es möglich, diesen relativ zu dem wenigstens einen Beleuchtungselement und der Kamera um eine Symmetrieachse zu drehen, oder das wenigstens eine Beleuchtungselement und/oder die Kamera relativ zu dem Gegenstand um dessen Symmetrieachse zu schwenken. Die Bewegungsrichtung ist dabei bevorzugt eine Umfangsrichtung, erfolgt also entlang einer Umfangslinie, für die ebenfalls ohne Weiteres ein Winkel angegeben werden kann, den diese mit wenigstens einem Beleuchtungselement einschließt. Bei wieder einem anderen Ausführungsbeispiel ist es möglich, dass die Relativbewegung nach Art einer Freiformbewegung bewirkt wird, beispielsweise mithilfe eines Roboterarms. Dabei ist es möglich, dass die Bewegungsrichtung zeitlich variiert. Entsprechend ist es auch möglich, dass der Winkel, den die Bewegungsrichtung mit dem wenigstens einen Beleuchtungselement einnimmt, einer zeitlichen Variation unterliegt. Dabei ist es nicht ausgeschlossen, dass der Winkel, den der die Bewegungsrichtung angebende Vektor mit wenigstens einem Beleuchtungselement einschließt, in wenigen Zeitpunkten den Wert 0° annimmt. Wesentlich ist in diesem Fall vielmehr, dass der Winkel im Zeitmittel und/oder vorzugsweise zu nahezu allen Zeiten bis auf wenige Zeitpunkte von 0° verschieden ist. Bevorzugt wird allerdings ein Verfahren, bei welchem die Relativbewegung nach Art einer Freiformbewegung derart bewirkt wird, dass der Winkel zwischen der Bewegungsrichtung und mindestens einem Beleuchtungselement zu allen Zeiten von 0° verschieden ist.

Nach einer bevorzugten Ausführungsform des Verfahrens schließt die Bewegungsrichtung mit beiden Beleuchtungselementen einen Winkel ein, der von 0° verschieden ist. In diesem Fall ist die Bewegungsrichtung zu keinem der beiden Beleuchtungselemente parallel ausgerichtet. Dies ist vorteilhaft, weil sich bei paralleler Ausrichtung der Bewegungsrichtung mit einem Beleuchtungselement für dieses Beleuchtungselement im Rahmen des Verfahrens lediglich redundante Informationen ergeben. Schließen dagegen beide Beleuchtungselemente mit der Bewegungsrichtung einen Winkel ein, der von 0° verschieden ist, ist es möglich, mithilfe beider Beleuchtungselemente nicht-redundante, relevante Informationen über die Gegenstandsoberfläche zu erhalten. Dabei ist bei einer Freiformbewegung nicht ausgeschlossen, dass im Rahmen des Verfahrens Zeitpunkte existieren, in denen die Bewegungsrichtung mit einem der Beleuchtungselemente einen Winkel von 0° einschließt. Bevorzugt beträgt der Winkel jedoch im Zeitmittel einen von 0° verschiedenen Wert und/oder ist besonders bevorzugt zu nahezu allen Zeiten bis auf wenige Zeitpunkte von 0° verschieden. Bei einer bevorzugten Ausführungsform ist der Winkel zu allen Zeiten von 0° verschieden.

Die Bewegungsrichtung der Relativbewegung schließt bei einer besonders bevorzugten Ausführungsform des Verfahrens mit wenigstens einem Beleuchtungselement einen Winkel ein, der von 90° verschieden ist. Besonders bevorzugt schließt die Bewegungsrichtung mit beiden Beleuchtungselementen einen Winkel ein, der von 90° verschieden ist. Insbesondere schließt die Bewegungsrichtung bevorzugt mit beiden Beleuchtungselementen einen Winkel ein, der jeweils sowohl von 0° als auch von 90° verschieden ist. In diesem Fall ist es ohne weiteres möglich, mithilfe des Verfahrens Informationen über die Oberflächenneigung in zwei orthogonal zueinander orientierte Richtungen auf der Gegenstandsoberfläche zu erhalten.

Im Rahmen der Aufnahme der Bildfolge werden mindestens zwei, vorzugsweise mehr als zwei Bilder aufgenommen. Besonders bevorzugt wird eine Vielzahl von Bildern aufgenommen, wobei die Anzahl der Bilder vorzugsweise größer als 10, vorzugsweise größer als 15, vorzugsweise größer als 50, besonders bevorzugt größer als 100 Bilder ist. Dabei hängt die Zahl der Bilder in der Bildfolge insbesondere von der gewünschten Winkelauflösung für die Erfassung und/oder Prüfung der Gegenstandsoberfläche ab.

Die Bildfolge wird vorzugsweise mit einer vorherbestimmten Frequenz aufgenommen, wobei die Frequenz bevorzugt von mindestens 2 Hz bis höchstens 100 kHz beträgt. Dabei sind 100 kHz eine Frequenz für die Bildfolge, die ohne weiteres mithilfe moderner Zeilenkameras erreichbar ist. Bevorzugte Werte für die Frequenz der Bildfolge sind einige 100 Hz bis zu einigen zig kHz. Gerade durch die Verwendung linienförmiger Beleuchtungselemente sind Frequenzen bis in den hohen kHz-Bereich möglich, da solche Beleuchtungselemente sehr schnell mit sehr kurzen Aktivierungszeiten und sehr kurzen Leuchtdauern geblitzt werden können. Bevorzugte Belichtungszeiten liegen im Bereich weniger μs bis zu wenigen zig ms.

Die Formulierung, dass die Bildfolge während der Relativbewegung aufgenommen wird, spricht an, dass sich die Gegenstandsoberfläche im realen Raum und/oder in der Bildebene von Bild zu Bild bewegt, oder dass sich die Beleuchtungssituation aufgrund der Relativbewegung von Bild zu Bild ändert. Es ist allerdings möglich, dass eine Anzahl von Bildern unter verschiedenen Beleuchtungen mit festgehaltener Relativposition aufgenommen wird, bevor eine Relativbewegung bewirkt wird. In diesem Fall werden also bevorzugt an jeder Relativposition eine Anzahl von Bildern unter einer Anzahl von Beleuchtungen aufgenommen, wobei bevorzugt an jeder festgehaltenen Relativposition alle interessierenden oder alle Beleuchtungselemente nacheinander aktiviert und Bilder unter den entsprechenden Beleuchtungen aufgenommen werden. Beispielsweise ist es möglich, dass an jeder festgehaltenen Relativposition zunächst ein Bild unter Beleuchtung durch das erste Beleuchtungselement aufgenommen wird, wonach an derselben Relativposition ein Bild unter Beleuchtung mit dem zweiten Beleuchtungselement aufgenommen wird.

Es ist möglich, dass die Relativbewegung während der Aufnahme der Bildfolge kontinuierlich erfolgt, also insbesondere auch während der Belichtung der Bildebene. In diesem Fall erfolgt die Relativbewegung vorzugsweise mit einer Geschwindigkeit, die so gewählt ist, dass auf den Bildern keine Bewegungsunschärfe erkennbar ist und/oder durch Blitzen der Beleuchtung minimiert wird. Beispielsweise ist es bevorzugt möglich, dass die Relativbewegung während einer Bildaufnahme gerade einen Pixelabstand der Kamera - gemäß den Abbildungseigenschaften derselben projiziert auf die Gegenstandsoberfläche - oder einen Bruchteil eines solchen gegenstandsseitigen Pixelabstandes beträgt.

Alternativ ist es möglich, dass die Relativbewegung während der Aufnahme der Bildfolge schrittweise bewirkt wird, wobei eine Relativposition der verschiedenen Elemente zueinander während der Belichtung der Bildebene festgehalten wird. Auch in diesem Fall ist es möglich, dass ein während der Relativbewegung zwischen den einzelnen Aufnahmen zurückgelegter Abstand gerade einem gegenstandsseitigen Pixelabstand oder einem Bruchteil eines gegenstandsseitigen Pixelabstands entspricht.

Bevorzugt wird bei einer Ausführungsform des Verfahrens die Geschwindigkeit und/oder Schrittweite der Relativbewegung auf die Ausdehnung einer Streukeule auf der Gegenstandsoberfläche abgestimmt. Dabei bestimmt die scheinbare Ausdehnung der Streukeule auf der Gegenstandsoberfläche die maximale Winkelauflösung, die im Rahmen des Verfahrens prinzipiell erreichbar ist. Unter gleicher Beleuchtung aufgenommene Bilder innerhalb der Bildfolge, die sich um eine Distanz unterscheiden, die wesentlich kleiner ist als der scheinbare Durchmesser der Streukeule auf der Gegenstandsoberfläche, weisen demnach redundante Informationen auf. Es ist daher möglich, im Rahmen des Verfahrens gerade bei optisch rauen Oberflächen in ganz erheblicher Weise Messzeit einzusparen, wenn die Schrittweite oder Geschwindigkeit der Relativbewegung auf den scheinbaren Durchmesser der Streukeule derart abgestimmt wird, dass die Oberfläche zwischen zwei Bildaufnahmen unter gleicher Beleuchtung in einer Größenordnung des scheinbaren Durchmessers der Streukeule verlagert wird.

Bei einer bevorzugten Ausführungsform des Verfahrens wird die Belichtungszeit für die einzelnen Bilder durch einen Shutter bestimmt, der vorzugsweise von der Kamera umfasst ist. Bei einer anderen bevorzugten Ausführungsform des Verfahrens wird die Belichtungszeit vorgegeben durch eine Zeitdauer, über welche ein Beleuchtungselement aktiviert ist. Insbesondere wird die Belichtungszeit bevorzugt durch Blitzen eines Beleuchtungselements vorgegeben.

Bei der Aufnahme der Bilder, die von der Bildfolge umfasst sind, wird die Gegenstandsoberfläche in der Bildebene der Kamera abgebildet. Hierbei ist es möglich, dass die Kamera auf die Gegenstandsoberfläche fokussiert ist, so dass diese scharf in der Bildebene der Kamera abgebildet wird. Die Formulierung schließt aber auch ein Ausführungsbeispiel ein, bei welchem der Kamerafokus außerhalb der Gegenstandsoberfläche gewählt wird, sodass diese unscharf in der Bildebene der Kamera abgebildet wird.

Für die Abbildung in der Bildebene wird vorzugsweise ein Objektiv verwendet, das von der Kamera umfasst oder separat zu dieser vorgesehen sein kann.

Die Formulierung "in der Bildfolge unterscheidbare Gegenstandsorte" spricht an, dass nur solche Gegenstandsorte untersucht werden, die zum einen in der Bildfolge abgebildet und zum anderen in dieser von anderen abgebildeten Gegenstandsorten unterscheidbar sind. Ein kleinster in der Bildebene noch unterscheidbarer Gegenstandsort ist dabei bevorzugt durch eine gegenstandsseitige Pixelgröße der Kamera vorgegeben. Es ist aber möglich, dass aufgrund einer unscharfen Abbildung der Gegenstandsoberfläche Gegenstandsorte in der Bildebene nicht voneinander unterschieden werden können, weil sie gemeinsam auf eine Mehrzahl von Pixeln abgebildet werden. Bevorzugt werden zum Zwecke der Auswertung dann Bildorte betrachtet, welche mehrere Pixel umfassen und insofern unterscheidbaren Gegenstandsorten auf der Gegenstandsoberfläche entsprechen. Es ist aber auch möglich, willkürlich eine vergröberte Auswertung durchzuführen, und Bildorte aus einer Mehrzahl von Pixeln zu bilden, obwohl eine höhere Auflösung möglich wäre. Dies kann beispielsweise zur Datenreduktion erfolgen, oder um die Auswertung zu beschleunigen. Auch in diesem Fall werden lediglich unterscheidbare Gegenstandsorte betrachtet.

Es wird eine Ausführungsform des Verfahrens bevorzugt, die sich dadurch auszeichnet, dass die Bildfolge der Gegenstandsoberfläche mit der Kamera in Reflexion aufgenommen wird. Entsprechend ist es bei dieser Ausführungsform des Verfahrens insbesondere möglich, eine nicht durchscheinende, streuende und/oder reflektierende Gegenstandsoberfläche zu erfassen beziehungsweise zu prüfen. Es wird allerdings auch eine Ausführungsform des Verfahrens bevorzugt, bei welcher alternativ oder zusätzlich vorgesehen ist, dass die Bildfolge der Gegenstandsoberfläche mit der Kamera in Transmission aufgenommen wird. In diesem Fall ist es zusätzlich oder alternativ möglich, eine durchscheinende oder transparente Oberfläche eines Prüfgegenstandes zu erfassen beziehungsweise zu prüfen. Insbesondere können auch durchscheinende Gegenstände geprüft werden, beispielsweise Gegenstände aus Glas oder durchscheinendem Kunststoff. Das wenigstens eine linienförmige Beleuchtungselement wird dann durch den durchscheinenden Gegenstand hindurch betrachtet, nämlich in Transmission. Eine Kombination der Messungen in Transmission und Reflexion ist möglich, wobei bei zumindest bereichsweise durchscheinenden Gegenständen sowohl durchtretendes Licht des wenigstens einen Beleuchtungselements als auch insbesondere an Grenzflächen des Gegenstandes reflektiertes Licht betrachtet wird. Bei einer bevorzugten Ausführungsform des Verfahrens wird so ein Reflex an einer vorderseitigen Grenzfläche eines durchsichtigen oder durchscheinenden Körpers ebenso wie ein rückseitiger Reflex an einer hinteren Grenzfläche des Körpers aufgenommen. Eine solche Vorgehensweise ist besonders vorteilhaft bei optischen Elementen, beispielsweise bei Linsen, bei denen sowohl die vordere Grenzfläche als auch die rückseitige Grenzfläche beurteilt werden können. In analoger Weise können solche optischen Elemente auch in Transmission geprüft werden. Im Rahmen des Verfahrens ist es auch möglich, Gegenstände bezüglich ihrer Form optisch zu erfassen und/oder zu prüfen, die sowohl durchscheinende als auch nichtdurchscheinende Bereiche aufweisen, insbesondere weil sie sowohl durchscheinende als auch nicht-durchscheinende Materialien aufweisen. Dies ist beispielsweise bei Kraftfahrzeugen der Fall, deren Lackoberflächen nicht-durchscheinend sind, während die Scheibenflächen durchscheinend sind und einen Reflex an der - von außen betrachteten - Vorderseite und ebenso an der Rückseite zeigen. Es ist also mit Hilfe des Verfahrens möglich, ein Kraftfahrzeug sowohl auf Beschädigungen in der Lackoberfläche, beispielsweise aufgrund von Herstellungsfehlern, einem Unfallschaden oder Hagelschaden, als auch auf Beschädigungen der Scheiben, beispielsweise durch Steinschlag, zu prüfen. Wird die Gegenstandsoberfläche in Transmission betrachtet, erfolgt die Abbildung in die Kamera typischerweise aufgrund des Brechungsgesetzes.

Es wird ein Verfahren bevorzugt, das sich dadurch auszeichnet, dass in jedem Einzelbild der Bildfolge bevorzugt entlang zumindest einer Linie - vorzugsweise in Richtung der Bewegung - wenigstens ein Bildort maximaler Beleuchtungsstärke ermittelt wird, der einem korrespondierenden Gegenstandsort zugeordnet wird. Diese Vorgehensweise entspricht dem Aufsuchen eines Maximums der Beleuchtungsstärke bevorzugt entlang zumindest einer Linie - vorzugsweise in Bewegungsrichtung - in jedem Einzelbild, was sehr schnell insbesondere durch die Kamera selbst hardwarebasiert vorgenommen werden kann. Hierbei ist eine wesentliche Datenreduktion erreichbar, da nicht mehr das gesamte Einzelbild, sondern nur noch die Position zumindest eines Maximums für die weitere Verarbeitung gespeichert beziehungsweise weitergegeben werden muss. Der Bildort maximaler Beleuchtungsstärke ist eindeutig einem Gegenstandsort zugeordnet über die Abbildungseigenschaften der Kamera. Vorzugsweise werden Bildorte maximaler Beleuchtungsstärke entlang einer Mehrzahl von Linien ermittelt, insbesondere entlang von Linien, die voneinander einen Abstand von einem Pixelabstand in der Bildebene der Kamera aufweisen.

Im Rahmen des Verfahrens wird bevorzugt nicht ein einziges, globales Maximum der Beleuchtungsstärke - vorzugsweise entlang wenigstens einer Linie - bestimmt, sondern vielmehr eine Mehrzahl lokaler Maxima der Beleuchtungsstärke. Dabei kann bei der hier diskutierten Ausführungsform in jedem Einzelbild festgestellt werden, von welchen Orten auf der Gegenstandsoberfläche die lokalen Maxima der Beleuchtungsstärke stammen. Diese Information umfasst zugleich die Information über die lokale Oberflächenneigung an den korrespondierenden Gegenstandsorten.

Es wird auch ein Verfahren bevorzugt, das sich dadurch auszeichnet, dass die Einzelbilder der Bildfolge proportional zu einem den Einzelbildern jeweils zugeordneten Zeitindex in der Bildebene rückverschoben werden. Wird die Relativbewegung mit konstanter Geschwindigkeit oder konstanter Schrittweite durchgeführt, ergibt sich so ohne weiteres, dass dann jedem rückverschobenen Bildort in der rückverschobenen Bildfolge genau ein Gegenstandsort zugeordnet ist. Die Bildorte in allen rückverschobenen Bildern der Bildfolge sind dann nämlich jeweils genau den korrespondierenden Gegenstandsorten zugeordnet, denen die entsprechenden Bildorte in dem ersten Bild der nicht-rückverschobenen Bildfolge zugeordnet sind. Hierdurch wird die weitere Auswertung stark vereinfacht.

Während bei bekannten Verfahren häufig im Anschluss an die Aufnahme einer Bildfolge ein sogenanntes Stitching oder eine Registrierung, mithin ein Zusammenfügen der verschiedenen Ansichten notwendig ist, muss dies bei dem hier beschriebenen Verfahren nicht explizit durchgeführt werden. Vielmehr wird insbesondere über die Rückverschiebung der Bilder in der Bildfolge implizit bereits eine entsprechende Übereinstimmung der einzelnen Ansichten hergestellt, sodass es keiner weiteren aufwändigen Rechenschritte mehr bedarf.

In diesem Zusammenhang wird insbesondere ein Verfahren bevorzugt, das sich dadurch auszeichnet, dass in der rückverschobenen Bildfolge für einen festgehaltenen Gegenstandsort ein Zeitindex ermittelt wird, bei dem die Beleuchtungsstärke an dem insoweit ebenfalls festgehaltenen rückverschobenen Bildort, der dem Gegenstandsort in der rückverschobenen Bildfolge zugeordnet ist, maximal ist. Dies bedeutet, dass die gesamte rückverschobene Bildfolge bei festgehaltenem Gegenstandsort und dabei ebenfalls festgehaltenem, korrespondierendem Bildort, entlang des Zeitindexes durchsucht wird, um ein Maximum der Beleuchtungsstärke abhängig von dem Zeitindex aufzufinden. Auf diese Weise wird der Zeitindex beziehungsweise dasjenige Bild in der Bildfolge aufgesucht, bei welchem die Beleuchtungsstärke für den festgehaltenen Gegenstandsort maximal ist.

Aus dem Zeitindex wird dann der entsprechende Bildort in der nicht-rückverschobenen Bildfolge ermittelt, wodurch sich ergibt, aus welcher Richtung im realen Raum die maximale Beleuchtungsstärke für den festgehaltenen Gegenstandsort während der Aufnahme kam. Aus der Position des nicht-rückverschobenen Bildortes wird die lokale Oberflächenneigung an dem Gegenstandsort berechnet.

Es wird auch ein Verfahren bevorzugt, das sich dadurch auszeichnet, dass aus einer Beleuchtungsstärken-Verteilung in der Bildebene - vorzugsweise um einen Bildort maximaler Beleuchtungsstärke - eine lokale optische Eigenschaft des korrespondierenden Gegenstandsorts ermittelt wird. Dabei spricht die Formulierung "um einen Bildort maximaler Beleuchtungsstärke" an, dass die Beleuchtungsstärken-Verteilung in einer Umgebung um ein lokales Maximum der Beleuchtungsstärke in der Bildebene untersucht wird. Insbesondere eine Breite und/oder Form der Beleuchtungsstärken-Verteilung gibt Auskunft über lokale optische Eigenschaften des korrespondierenden Gegenstandsorts, insbesondere über deren lokale Streueigenschaften, insbesondere über die optische Rauigkeit an dem Gegenstandsort. Dabei weisen optisch glatte Oberflächen scharf begrenzte Maxima in der Bildebene auf, während glänzende Oberflächen mehr oder weniger scharf ausgeprägte Maxima aufweisen, die breiter sind als bei optisch glatten Oberflächen und schmaler als bei optisch rauen Oberflächen. Schließlich liegt bei optisch rauen Oberflächen eine breite Verteilung beispielsweise in Form einer Cosinus-förmigen Kurve vor.

Bei einer Ausführungsform des Verfahrens, bei welcher die Kamera derart mittig relativ zu den Beleuchtungselementen angeordnet ist, dass ein Sehstrahl der Kamera der Beleuchtungsrichtung entspricht, hängt die Auswertung der Oberflächenneigung in Bezug auf die ermittelten, lokalen Maxima der Beleuchtungsstärke nicht von den lokalen optischen Eigenschaften des korrespondierenden Gegenstandsorts ab. In diesem Fall weisen nämlich der Sehstrahl und die Beleuchtungsrichtung für jedes lokale Maximum gerade in Richtung des Normalenvektors der Oberflächenneigung.

Ist die Kamera dagegen außermittig angeordnet, sodass der Sehstrahl und die Beleuchtungsrichtung auseinanderfallen, müssen die lokalen optischen Eigenschaften des Gegenstandsorts bei der Auswertung berücksichtigt werden, weil im Fall optisch glatter und glänzender Oberflächen das Reflexionsgesetz gilt, während bei optisch rauen Oberflächen die Beleuchtungsrichtung für den Bildort maximaler Beleuchtungsstärke mit der Oberflächennormale übereinstimmt. Für die Auswertung ist es bei einer solchen Anordnung daher notwendig, zunächst aus der Beleuchtungsstärken-Verteilung in einer Umgebung der lokalen Maxima die lokalen optischen Eigenschaften des korrespondierenden Gegenstandsorts zu ermitteln, bevor die Lage der entsprechenden Bildorte in Hinblick auf die lokalen Oberflächenneigungen ausgewertet werden kann. Wird dabei für den momentan untersuchten Gegenstandsort lokal eine optisch glatte oder glänzende Oberfläche festgestellt, wird zur Auswertung das Reflexionsgesetz herangezogen, während angenommen wird, dass die Beleuchtungsrichtung mit der Oberflächennormalen übereinstimmt, wenn für den Gegenstandsort lokal eine optisch raue Oberfläche festgestellt wird.

Anhand dieser Überlegungen zeigt sich aber, dass das Verfahren ohne weiteres sowohl für optisch glatte als auch für glänzende und optisch raue Oberflächen geeignet und durchführbar ist. Insbesondere können auch vollständig diffuse Oberflächen mithilfe des Verfahrens untersucht werden. Ebenso sind Kombinationen aus den vorgenannten Oberflächen möglich.

Bei einer Ausführungsform des Verfahrens wird ein Summenbild aller - vorzugsweise rückverschobenen - Einzelbilder berechnet. Die Einzelbilder werden mithin zu dem Summenbild aufsummiert. Das Summenbild umfasst Informationen über eine Textur oder einen über alle Richtungen integrierten beziehungsweise gemittelten Reflexionsgrad der Gegenstandsoberfläche.

Bei einer Ausführungsform des Verfahrens wird eine Höhe mindestens eines lokalen Maximums ausgewertet, um Informationen über einen Glanzgrad der Gegenstandsoberfläche an dem dem lokalen Maximum zugeordneten Gegenstandsort zu erhalten. Dabei gilt, dass die Beleuchtungsstärke in dem lokalen Maximum umso größer ist, je mehr die Oberfläche an dem Gegenstandsort glänzt beziehungsweise je höher der Glanzgrad ist. Insbesondere ist es möglich, im Rahmen des Verfahrens die ermittelten lokalen Maxima bezüglich ihrer Höhe auszuwerten und hieraus ein Glanzbild der Gegenstandsoberfläche zusammenzusetzen beziehungsweise zu ermitteln. Hierbei kann auch die Breite der Maxima in die Auswertung eingehen.

Besonders bevorzugt wird eine Ausführungsform des Verfahrens, bei welcher genau ein und nur ein linienförmiges Beleuchtungselement verwendet wird, wobei aus einer Beleuchtungsstärken-Verteilung in der Bildebene - vorzugsweise um einen Bildort maximaler Beleuchtungsstärke - eine lokale optische Eigenschaft des korrespondierenden Gegenstandsorts ermittelt wird. Dies stellt eine besonders ökonomische Ausführungsform des Verfahrens dar, weil lediglich ein Beleuchtungselement verwendet wird, wobei hiermit ohne weiteres lokale optische Eigenschaften aus der entsprechenden Beleuchtungsstärken-Verteilung gewonnen werden können.

Alternativ oder zusätzlich wird bevorzugt, dass aus einer Höhe einer Beleuchtungsstärke - vorzugsweise an einem Bildort maximaler Beleuchtungsstärke - in der Bildebene eine lokale optische Eigenschaft des korrespondierenden Gegenstandsorts ermittelt wird. Dies kann bevorzugt bei einer Ausführungsform des Verfahrens durchgeführt werden, bei welcher nur ein Beleuchtungselement verwendet wird, es kann aber ebenso bevorzugt auch bei einer Ausführungsform des Verfahrens durchgeführt werden, bei welcher genau zwei oder auch mehr als zwei Beleuchtungselemente verwendet werden. Aus der Höhe insbesondere eines lokalen Maximums lässt sich neben dem Glanzgrad - wie oben ausgeführt - oder aus dem Glanzgrad - insbesondere aus den lokalen Streueigenschaften der Oberfläche - eine Information über Oberflächendefekte gewinnen, insbesondere über Kratzer oder lokale Verformungen der Oberfläche. Die Auswertung der Höhe der Beleuchtungsstärke - insbesondere an einem Bildort maximaler Beleuchtungsstärke - in der Bildebene wird also bevorzugt herangezogen, um eine Oberflächendefekterkennung durchzuführen. Dabei zeigt sich insbesondere, dass typischerweise Oberflächendefekte zu einer Verringerung des Glanzgrads führen. Letztlich kann daher ein Glanzbild der Gegenstandsoberfläche verwendet werden, um Oberflächendefekte sehr genau darzustellen, weil diese in dem Glanzbild deutlich hervortreten. Selbstverständlich ist es dabei möglich, auch die Breite der Beleuchtungsstärke-Verteilung - insbesondere in einer Umgebung der Maxima - in die Auswertung einzubeziehen.

Die Aufgabe wird auch gelöst, indem eine Vorrichtung zur optischen Formerfassung und/oder Prüfung eines Gegenstandes mit den Merkmalen des Anspruchs 6 geschaffen wird. Die Vorrichtung ist insbesondere geeignet und/oder eingerichtet zur Durchführung eines Verfahrens nach einer der zuvor beschriebenen Ausführungsformen.

Sie umfasst mindestens eine Kamera und mindestens ein linienförmiges Beleuchtungselement. Dabei sind die Kamera und das wenigstens eine Beleuchtungselement derart relativ zueinander angeordnet, dass eine Gegenstandsoberfläche durch das wenigstens eine Beleuchtungselement beleuchtbar und durch die Kamera aufnehmbar ist. Mit der Kamera ist eine Bildfolge der Gegenstandsoberfläche während einer Relativbewegung von mindestens zwei Elementen relativ zueinander ausgewählt aus einer Gruppe bestehend aus der Gegenstandsoberfläche, dem wenigstens einen Beleuchtungselement und der Kamera aufnehmbar. Dabei wird die Gegenstandsoberfläche in einer Bildebene der Kamera abgebildet. Das wenigstens eine Beleuchtungselement ist derart ansteuerbar, dass die Gegenstandsoberfläche während der Belichtung der Bildebene durch das mindestens eine Beleuchtungselement beleuchtet wird. Die Vorrichtung weist außerdem eine Recheneinrichtung auf, die ausgebildet ist zur Auswertung der aufgenommenen Bildfolge in Hinblick auf lokale Oberflächenneigungen und/oder lokale optische Eigenschaften der Gegenstandsoberfläche.

Die Recheneinrichtung ist hierzu bevorzugt auf eine Weise ausgebildet, indem sie eingerichtet ist zur Zuordnung korrespondierender Bildorte maximaler Beleuchtungsstärke in der Bildebene zu in der Bildfolge unterscheidbaren Gegenstandsorten auf der Gegenstandsoberfläche. Die Recheneinrichtung ist weiterhin bevorzugt ausgebildet zum Berechnen von lokalen Oberflächenneigungen an den Gegenstandsorten aus der Position des jeweils korrespondierenden Bildortes in der Bildebene.

Die Aufgabe wird insbesondere auch gelöst, indem eine Vorrichtung zur optischen Formerfassung und/oder Prüfung eines Gegenstandes mit den folgenden Merkmalen geschaffen wird: Die Vorrichtung ist insbesondere geeignet und/oder eingerichtet zur Durchführung eines Verfahrens nach einer der zuvor beschriebenen Ausführungsformen. Sie umfasst mindestens eine Kamera und mindestens zwei linienförmige Beleuchtungselemente. Dabei sind die Kamera und die Beleuchtungselemente derart relativ zueinander angeordnet, dass eine Gegenstandsoberfläche durch die Beleuchtungselemente beleuchtbar und durch die Kamera aufnehmbar ist. Die Beleuchtungselemente sind derart angeordnet, dass sie einen Winkel miteinander einschließen, der von 0° verschieden ist. Mit der Kamera ist eine Bildfolge der Gegenstandsoberfläche während einer Relativbewegung von zumindest zwei Elementen relativ zueinander ausgewählt aus einer Gruppe bestehend aus der Gegenstandsoberfläche, den Beleuchtungselementen und der Kamera aufnehmbar. Dabei wird die Gegenstandsoberfläche in einer Bildebene der Kamera abgebildet. Die Beleuchtungselemente sind derart ansteuerbar, dass die Gegenstandsoberfläche während der Belichtung der Bildebene zumindest durch ein Beleuchtungselement beleuchtet wird. Die Vorrichtung weist außerdem eine Recheneinrichtung auf, die ausgebildet ist zur Auswertung der aufgenommenen Bildfolge in Hinblick auf lokale Oberflächenneigungen und/oder lokale optische Eigenschaften der Gegenstandsoberfläche.

Die Recheneinrichtung ist hierzu bevorzugt auf eine Weise ausgebildet, indem sie eingerichtet ist zur Zuordnung korrespondierender Bildorte maximaler Beleuchtungsstärke in der Bildebene zu in der Bildfolge unterscheidbaren Gegenstandsorten auf der Gegenstandsoberfläche. Die Recheneinrichtung ist weiterhin bevorzugt ausgebildet zum Berechnen von lokalen Oberflächenneigungen an den Gegenstandsorten aus der Position des jeweils korrespondierenden Bildortes in der Bildebene.

Es wird insbesondere ein Ausführungsbeispiel der Vorrichtung bevorzugt, welches genau ein und nur ein linienförmiges Beleuchtungselement aufweist. Dabei ist die Vorrichtung mit dem genau einen linienförmigen Beleuchtungselement geeignet, Oberflächenneigungen des Gegenstands in einer Richtung zu erfassen. Außerdem ist die Vorrichtung geeignet, lokale Streueigenschaften zu erfassen und insbesondere hieraus Oberflächendefekte wie beispielsweise Kratzer oder lokale Deformationen der Oberfläche zu detektieren. Alternativ wird besonders auch ein Ausführungsbeispiel der Vorrichtung bevorzugt, welches genau zwei und nur zwei linienförmige Beleuchtungselemente aufweist. Mithilfe einer solchen Vorrichtung ist es möglich, Oberflächenneigungen der Gegenstandsoberfläche in zwei Richtungen zu erfassen. Selbstverständlich ist es mithilfe dieser Vorrichtung auch möglich - insbesondere aus lokalen Streueigenschaften - Oberflächendefekte, beispielsweise Kratzer oder lokale Deformationen der Oberfläche, zu erfassen.

Es wird ein Ausführungsbeispiel der Vorrichtung bevorzugt, dass sich dadurch auszeichnet, dass die Vorrichtung eingerichtet ist, um mit der Kamera eine Bildfolge der Gegenstandsoberfläche in Reflexion aufzunehmen. Hierzu ist es insbesondere möglich, dass die Kamera einerseits und das mindestens eine Beleuchtungselement andererseits auch auf einer gleichen Seite der aufzunehmenden Gegenstandsoberfläche angeordnet sind. Alternativ oder zusätzlich wird ein Ausführungsbeispiel der Vorrichtung bevorzugt, dass eingerichtet ist, um die Bildfolge der Gegenstandsoberfläche mit der Kamera in Transmission aufzunehmen. Hierbei sind das wenigstens eine Beleuchtungselement einerseits und die Kamera andererseits vorzugsweise auf verschiedenen Seiten der Gegenstandsoberfläche angeordnet. Besonders bevorzugt wird ein Ausführungsbeispiel der Vorrichtung, bei welchem sowohl eine Messung in Transmission als auch eine Messung in Reflexion möglich ist. Hierzu ist bevorzugt eine Mehrzahl von Kameras vorgesehen, insbesondere ist es möglich, dass die Vorrichtung eine erste Kamera zur Messung in Reflexion aufweist, die auf einer gleichen Seite der Gegenstandsoberfläche wie wenigstens ein Beleuchtungselement angeordnet ist, wobei die Vorrichtung eine zweite Kamera zur Messung in Transmission aufweist, die auf einer dem Beleuchtungselement gegenüberliegenden Seite der zu beobachtenden Gegenstandsoberfläche angeordnet ist. Es ist aber auch möglich, eine Messung in Transmission und/oder Reflexion mit nur einer Kamera durchzuführen, wobei Beleuchtungselemente beidseitig der Gegenstandsoberfläche vorgesehen sind und/oder wobei wenigstens ein Beleuchtungselement den Gegenstand entlang eines Winkelbereichs umgreift, der größer ist als 180°, wobei der Winkel besonders bevorzugt 360° beträgt. Mit Hilfe der Vorrichtung ist es vorzugsweise möglich, sowohl durchscheinende als nicht-durchscheinende Gegenstandsoberflächen zu erfassen beziehungsweise zu prüfen. Insofern wird auch auf die zu oben stehenden Ausführungen zu verschiedenen entsprechenden Ausführungsformen des Verfahrens verwiesen.

Sind beidseitig der Gegenstandsoberfläche Beleuchtungselemente vorgesehen und/oder umgreift wenigstens ein Beleuchtungselement den Gegenstand entlang eines Winkelbereichs, der größer ist als 180°, wobei der Winkel besonders bevorzugt 360° beträgt, ist es insbesondere möglich, eine Reflexion einer Beleuchtungslinie an einer der Kamera zugewandten Vorderseite des Gegenstands einerseits von einer Beleuchtung einer der Kamera abgewandten Rückseite des Gegenstands andererseits zu unterscheiden, insbesondere im Rahmen der Auswertung der aufgenommenen Bilder voneinander zu separieren. Dies unterscheidet die hier beschriebene Vorgehensweise insbesondere von deflektometrischen Verfahren, welche auf einer Streifenprojektion basieren. Im Übrigen ist es bei der hier skizzierten Anordnung von wenigstens einem Beleuchtungselement möglich, einen weiten Bereich von Oberflächenneigungen und/oder -winkeln, insbesondere von mehr als 45° abweichend von einer horizontalen Orientierung parallel zu einer Haupterstreckung der Oberfläche zu erfassen. Dies ist insbesondere dann möglich, wenn wenigstens ein Beleuchtungselement schraubenlinienförmig ausgebildet ist, worauf im Folgenden noch näher eingegangen wird.

Es wird eine Vorrichtung bevorzugt, die sich durch eine Bewegungseinrichtung auszeichnet, mit der die Relativbewegung entlang einer Bewegungsrichtung zumindest zwischen zwei Elementen bewirkt werden kann, wobei die beiden Elemente ausgewählt sind aus einer Gruppe bestehend aus einem Gegenstand, der die Gegenstandsoberfläche aufweist, dem wenigstens einen Beleuchtungselement und der Kamera. Zu den verschiedenen Möglichkeiten, die Relativbewegung durchzuführen, wird auf die Ausführungen zu dem Verfahren verwiesen. Die Bewegungseinrichtung ist derart ausgebildet und relativ zu dem wenigstens einen Beleuchtungselement angeordnet, dass die Bewegungsrichtung mit wenigstens einem Beleuchtungselement einen Winkel einschließt, der von 0° verschieden ist. Vorzugsweise schließt die Bewegungsrichtung mit jedem Beleuchtungselement einen Winkel ein, der von 0° verschieden ist. Zusätzlich schließt die Bewegungsrichtung bei einem bevorzugten Ausführungsbeispiel mit mindestens einem Beleuchtungselement einen Winkel ein, der von 90° verschieden ist. Es wird auch ein Ausführungsbeispiel bevorzugt, bei welchem die Bewegungsrichtung mit jedem Beleuchtungselement einen Winkel einschließt, der von 90° verschieden ist.

Bei einem bevorzugten Ausführungsbeispiel weist die Bewegungseinrichtung ein Halteelement auf, mit welchem der Gegenstand, das wenigstens eine Beleuchtungselement und/oder die Kamera gehalten und verlagert werden kann/können. Bei einem besonders bevorzugten Ausführungsbeispiel ist die Bewegungseinrichtung so ausgebildet, dass durch sie der Gegenstand und mithin die Gegenstandsoberfläche relativ zu dem wenigstens einen Beleuchtungselement und der Kamera bewegbar ist. In diesem Fall weist die Bewegungseinrichtung ein Halteelement für den Gegenstand auf, wobei das Halteelement gemeinsam mit dem Gegenstand relativ zu einem raumfesten Koordinatensystem, demgegenüber die Kamera und das wenigstens eine Beleuchtungselement vorzugsweise stillstehen, bewegbar ist.

In Hinblick auf die Vorrichtung ergeben sich die Vorteile, die bereits in Zusammenhang mit dem Verfahren erläutert wurden. In gleicher Weise ergeben sich für die Vorrichtung die Einsatzmöglichkeiten, die bereits in Hinblick auf das Verfahren erläutert wurden. Dabei sind insbesondere Neigungswinkel von weniger als 5° darstellbar. Aufgrund der Unempfindlichkeit der Vorrichtung und des Verfahrens gegenüber den lokalen optischen Eigenschaften der Oberfläche sind diese besonders gut geeignet gerade auch zur Untersuchung von Autolacken oder Displays, beispielsweise Displays für Telefone, insbesondere von Smartphones und Tablet-PCs. Die Vorrichtung und das Verfahren sind besonders geeignet zur Prüfung von Gegenständen, bei denen es auf eine einwandfreie Optik ankommt, weil die Vorrichtung und das Verfahren für eine schnelle, wirtschaftliche, unempfindliche und zugleich hochgenaue optische Formerfassung und/oder Prüfung eines Gegenstands geeignet sind. Wie bereits erwähnt sind die Vorrichtung und das Verfahren insbesondere geeignet zur Prüfung von Gegenständen, die durchscheinende und/oder nicht-durchscheinende Oberflächen aufweisen. Die Vorrichtung und das Verfahren sind daher auch besonders geeignet zur Erfassung und/oder Prüfung von optischen Elementen, insbesondere optischen Linsen, oder auch Gegenständen, die sowohl durchscheinende als auch nicht-durchscheinende Materialien aufweisen, beispielsweise Kraftfahrzeuge. Bei letzteren ist insbesondere mit Hilfe der Vorrichtung und/oder des Verfahrens eine Endprüfung bei der Herstellung der Fahrzeugkarosserie oder auch eine Schadenserkennung möglich, insbesondere im Versicherungsfall, ganz besonders eine Hagelschadenerkennung. Displays von Telefonen, insbesondere von Smartphones, und Displays von Tablet-PCs können darauf geprüft werden, ob sie verzogen, verkratzt oder in anderer Weise beschädigt sind. Mit Hilfe des Verfahrens und der Vorrichtung ist es außerdem möglich, zugleich die Rückseite eines solchen Gegenstandes zu prüfen, welche typischerweise diffus streut und nicht durchscheinend ausgebildet ist.

Es zeigt sich auch, dass die Vorrichtung und damit auch das Verfahren gerade aufgrund der Verwendung linienförmiger Beleuchtungselemente sehr gut skalierbar sind. Insbesondere ist es möglich, die Vorrichtung in einer Prüfhalle aufzubauen, um beispielsweise ganze Automobile bezüglich ihrer Form zu erfassen beziehungsweise in Hinblick auf ihre Oberfläche zu prüfen. Dabei hält sich der technische und ökonomische Aufwand selbst bei sehr großer Ausgestaltung der Vorrichtung - insbesondere in Hallenformat - in Grenzen, weil lediglich linienförmige Beleuchtungen, also quasi eindimensionale Beleuchtungselemente, eingesetzt werden. Entsprechend große Vorrichtungen wären mit flächiger Beleuchtung kaum oder nur unter erheblichem technischem und energetischem Aufwand möglich.

Es wird auch eine Vorrichtung bevorzugt, die sich dadurch auszeichnet, dass das wenigstens eine Beleuchtungselement eine diffuse, ungerichtete Abstrahlcharakteristik aufweisen. Dabei ist die Abstrahlcharakteristik vorzugsweise eine lambertsche Abstrahlcharakteristik. Alternativ ist es möglich, dass die Abstrahlcharakteristik eine gleichverteilte Abstrahlcharakteristik ist. Es ist möglich, dass das wenigstens eine Beleuchtungselement bereits für sich genommen eine entsprechende Abstrahlcharakteristik aufweist. Alternativ ist es möglich, dass mindestens einem Beleuchtungselement wenigstens ein optisches Element zugeordnet ist, das ausgebildet ist, um die gewünschte Beleuchtungsverteilung zu erreichen. Dies kann beispielsweise eine Blende, eine Streuscheibe oder ein anderes geeignetes optisches Element sein.

Das wenigstens eine Beleuchtungselement weist bevorzugt eine Breite d einer leuchtenden Linie beziehungsweise einer linienförmigen leuchtenden Fläche - gemessen senkrecht zu der linienförmigen Erstreckung des Beleuchtungselements - auf. Dabei ist vorzugsweise vorgesehen, dass die Breite d dieselbe Größenordnung aufweist wie eine Blendenöffnung der Kamera beziehungsweise ein Durchmesser D einer Eintrittspupille derselben. Vorzugsweise ist die Breite d der Blendenöffnung oder dem Durchmesser D näherungsweise gleich, besonders bevorzugt gleich. Eine Breite d, die wesentlich schmaler ist als der Durchmesser D ist technisch kaum sinnvoll, da sie ohnehin auf den Durchmesser eines Unschärfescheibchens aufgeweitet wird.

Bei einem bevorzugten Ausführungsbeispiel ist eine Leuchtdichte der leuchtenden Fläche räumlich entlang ihrer Ausdehnungsrichtung konstant und ebenso zeitlich konstant oder nahezu konstant. In einer anderen, ebenfalls bevorzugten Ausführungsform kann die Leuchtdichte der leuchtenden Fläche räumlich entlang ihrer Ausdehnungsrichtung variiert werden und/oder zeitlich variiert werden. Dies dient dazu, für Oberflächen bzw. Oberflächenbereiche beispielsweise mit schwarzen, diffus reflektierenden Eigenschaften mit größerer Leuchtdichte und für Oberflächen bzw. Oberflächenbereiche mit beispielsweise metallischen, optisch glatten Eigenschaften mit entsprechend geringerer Leuchtdichte zu beleuchten.

Die Abstrahlcharakteristik bestimmt letztlich das Leuchtdichteprofil senkrecht zur Ausdehnungsrichtung des linienförmigen Beleuchtungselements. Dieses kann im Rahmen des Verfahrens und/oder der Vorrichtung verschiedene Verteilungen annehmen. Beispielsweise ist es möglich, dass die Leuchtdichte über die Breite d des Beleuchtungselements konstant ist. Alternativ wird bevorzugt, dass die Leuchtdichte ein gaußförmiges oder näherungsweise gaußförmiges Profil aufweist. Generell wird ein weicher, kontinuierlicher Verlauf der Leuchtdichte entlang der Breite d des Beleuchtungselements bevorzugt. Die Leuchtdichte kann auch zusammengesetzt sein aus einer Mehrzahl nebeneinander gereihter Funktionen. Auch eine sinus- und/oder cosinusförmige Leuchtdichte ist möglich. Besonders bevorzugt wird ein Beleuchtungselement, welches zwei parallele, zueinander versetzte Beleuchtungslinien aufweist. Die Leuchtdichteprofile der beiden Linien weisen vorzugsweise einen gaußförmigen oder cosinusförmigen Verlauf auf. Schließlich ist es auch möglich, dass ein Beleuchtungselement eine Mehrzahl von parallelen, zueinander benachbarten beziehungsweise zueinander versetzten Beleuchtungslinien aufweist. Dabei ist es möglich, dass die verschiedenen Beleuchtungslinien des einen Beleuchtungselements verschiedene Leuchtdichteprofile oder aber identische Leuchtdichteprofile aufweisen.

Um die Leuchtdichteverteilung des Beleuchtungselements zu definieren, wird vorzugsweise ein Streuelement, insbesondere ein Streukörper verwendet, wobei die Form des Streuelements das Beleuchtungsprofil bestimmt.

Es wird auch eine Vorrichtung bevorzugt, die sich dadurch auszeichnet, dass wenigstens zwei Beleuchtungselemente einen Winkel miteinander einschließen, der von mindestens 1° bis höchstens 179° beträgt. Bevorzugt beträgt der Winkel 60°, vorzugsweise 90°, vorzugsweise 120°. Mithilfe der nicht parallel zueinander orientierten Beleuchtungselemente ist es möglich, Informationen über die lokale Oberflächenneigung der Gegenstandsoberfläche in zwei Richtungen zu erhalten.

Es ist möglich, dass die Beleuchtungselemente X-förmig angeordnet sind, wobei sie sich vorzugsweise in einem gemeinsamen Mittelpunkt schneiden. Eine Ausnehmung oder Blende für die Kamera ist dabei bevorzugt in dem Mittelpunkt vorgesehen, so dass die Kamera durch die Beleuchtungselemente hindurch auf die Gegenstandsoberfläche blickt. Problematisch ist dabei, wenn Beleuchtungslinien der Beleuchtungselemente ebenfalls durch den Mittelpunkt verlaufen, weil sie dann am Ort der Blende unterbrochen sein müssen. Es ergeben sich dann Bereiche der Gegenstandsoberfläche, die nicht sinnvoll auswertbar sind. Dieses Problem besteht grundsätzlich auch, wenn die Kamera außermittig angeordnet wird, weil dann jedenfalls die beiden Beleuchtungslinien sich in dem gemeinsamen Mittelpunkt kreuzen, so dass jedenfalls eine der beiden Beleuchtungslinien unterbrochen werden muss. Es wird daher eine Anordnung der Beleuchtungslinien der Beleuchtungselemente dergestalt bevorzugt, dass diese außermittig angeordnet sind, also nicht durch den gemeinsamen Mittelpunkt der Beleuchtungselemente verlaufen. Besonders bevorzugt wird die Anordnung der Beleuchtungslinien symmetrisiert, wobei jedes Beleuchtungselement mindestens zwei Beleuchtungslinien aufweist, die beidseitig versetzt von dem Mittelpunkt angeordnet sind. Es ist in diesem Fall auch ohne Weiteres möglich, die Blende für die Kamera in dem gemeinsamen Mittelpunkt anzuordnen, ohne dass sich die beschriebenen Nachteile ergeben.

Anstelle einer X-förmigen Anordnung der Beleuchtungselemente ist auch eine A- oder V-förmige Anordnung möglich, bei der die Beleuchtungselemente keinen gemeinsamen Mittelpunkt sondern vielmehr einen gemeinsamen Endpunkt teilen. Ganz allgemein ist es möglich, den Punkt, an welchem sich die Beleuchtungselemente kreuzen, außermittig, am Rand von wenigsten einem der Beleuchtungselemente und/oder jedenfalls nicht im Bereich einer Beleuchtungslinie eines Beleuchtungselements zu wählen. Auch ist eine Anordnung möglich, bei welcher die Beleuchtungselemente nicht miteinander überlappen, sondern vielmehr zueinander versetzt angeordnet sind.

Es wird auch eine Vorrichtung bevorzugt, die sich dadurch auszeichnet, dass die Bewegungsrichtung den Winkel zwischen den wenigstens zwei Beleuchtungselementen teilt. Der Vektor der Bewegungsrichtung ist demnach zwischen den die Längserstreckung der Beleuchtungselemente jeweils angebenden Vektoren angeordnet. Bei einem bevorzugten Ausführungsbeispiel bildet die Bewegungsrichtung eine Winkelhalbierende bezüglich des Winkels zwischen den Beleuchtungselementen. Hierdurch weist die Anordnung eine gewisse Symmetrie auf, was insbesondere die Auswertung der Messergebnisse vereinfacht. Schließen beispielsweise die Beleuchtungselemente einen Winkel von 60° miteinander ein, so sind sie bevorzugt in einem Winkelabstand von einerseits +30° und andererseits - 30° zu der Bewegungsrichtung angeordnet. Entsprechend ist es möglich, die Beleuchtungselemente relativ zu der Bewegungsrichtung in Winkelabständen von +45° und -45° anzuordnen. Ebenso ist es bevorzugt möglich, die Beleuchtungselemente in Hinblick auf die Bewegungsrichtung in einem Winkelabstand von +60° und -60° anzuordnen. Selbstverständlich sind auch andere Winkelabstände möglich.

Es wird auch eine Vorrichtung bevorzugt, die sich dadurch auszeichnet, dass die Beleuchtungselemente voneinander verschiedene spektrale Verteilungen abstrahlen. Dies spricht in Hinblick auf das Verfahren eine Vorgehensweise an, die auch als Farbmultiplex bezeichnet wird. Es ist dann möglich, die Beleuchtungen simultan zu aktivieren und gleichzeitig Bilder der Gegenstandsoberfläche unter verschiedenen Beleuchtungen aufzunehmen, wobei die Bilder anhand der spektralen Verteilung der Beleuchtungen vorzugweise mithilfe spektraler Filter voneinander separiert werden.

Besonders bevorzugt wird allerdings ein Ausführungsbeispiel der Vorrichtung, bei welchem die Beleuchtungselemente alternativ oder zusätzlich zeitlich unabhängig voneinander angesteuert werden können. In diesem Fall ist es möglich, im Rahmen des Verfahrens eine auch als Zeitmultiplex bezeichnete Vorgehensweise zu verwirklichen. Dabei werden Bilder der Gegenstandsoberfläche unter verschiedener Beleuchtung zeitlich nacheinander aufgenommen, vorzugsweise in rascher Folge. Dabei können dank der schnell ansteuerbaren, linienförmigen Beleuchtungselemente und moderner Kameratechnik Bildwiederholraten von mehreren kHz, insbesondere von bis zu 100 kHz erreicht werden.

Es wird also besonders eine Vorrichtung bevorzugt, die eingerichtet ist zur Durchführung eines Zeitmultiplex-Verfahrens. In gleicher Weise wird besonders ein Verfahren bevorzugt, bei welchem die Einzelbilder der Bildfolge im Zeitmultiplex-Verfahren aufgenommen werden.

Es wird auch eine Vorrichtung bevorzugt, die sich dadurch auszeichnet, dass mehr als zwei linienförmige Beleuchtungselemente vorgesehen sind. Mithilfe von mehr als zwei Beleuchtungselementen ist es insbesondere möglich, eine Redundanz für eine genauere Messung zu schaffen, einen größeren Winkelbereich in Hinblick auf die Oberflächenneigung der Gegenstandsoberfläche zu erfassen und/oder eine lokale Höheninformation über die Oberfläche zu gewinnen. Bei einem bevorzugten Ausführungsbeispiel schließen die Beleuchtungselemente verschiedene Winkel mit der Bewegungsrichtung ein. Insbesondere in diesem Fall ist es mithilfe der mehr als zwei Beleuchtungselemente möglich, eine Redundanz bereitzustellen und/oder einen vergrößerten Winkelbereich der Oberflächenneigung zu erfassen. Es wird auch ein Ausführungsbeispiel bevorzugt, bei welchem die Beleuchtungselemente derart verschieden voneinander angeordnet sind, dass sie verschiedene Abstände zu der Gegenstandsoberfläche aufweisen. Diese Abstände werden vorzugsweise in Richtung der optischen Achse gemessen. In diesem Fall ist es möglich, mithilfe verschiedener Beleuchtungen unter verschiedenen Abständen zu der Gegenstandsoberfläche eine lokale Höheninformation über die Gegenstandsoberfläche zu gewinnen. Alternativ oder zusätzlich wird ein Ausführungsbeispiel bevorzugt, bei welchem die Beleuchtungselemente relativ zueinander verschoben sind. Besonders bevorzugt sind die verschiedenen Beleuchtungselemente in derselben Ebene angeordnet und dort relativ zueinander verschoben. Diese Anordnung ist besonders geeignet zur Erfassung eines großen Winkelbereichs in Hinblick auf die Oberflächenneigung. Insbesondere ist es möglich, dass vier Beleuchtungselemente vorgesehen sind, die paarweise einen von 0° verschiedenen Winkel miteinander einschließen und somit quasi paarweise kreuzförmig angeordnet sind. Die einzelnen kreuzförmigen Anordnungen sind vorzugsweise in derselben Ebene versetzt zueinander angeordnet, sodass eine Redundanz erzielbar und/oder ein großer Winkelbereich der Oberflächenneigung erfassbar ist.

Es wird auch eine Vorrichtung bevorzugt, die sich dadurch auszeichnet, dass mindestens zwei Kameras vorgesehen sind, die versetzt zueinander angeordnet sind. Alternativ oder zusätzlich ist es möglich, dass mindestens drei Beleuchtungselemente derart angeordnet sind, dass ein erstes und ein zweites Beleuchtungselement gemeinsam in einem ersten Abstand zu der Gegenstandsoberfläche angeordnete sind, wobei ein drittes Beleuchtungselement in einem zweiten Abstand zu der Gegenstandsoberfläche angeordnet ist. Der erste Abstand ist von dem zweiten Abstand verschieden. Dabei werden der erste und der zweite Abstand vorzugweise in Richtung der optischen Achse gemessen. Die Recheneinrichtung ist ausgebildet, um eine Höheninformation über die Gegenstandsoberfläche aus vorzugsweise korrespondierenden Bildern der verschiedenen Kameras und/oder aus mit verschiedenen Abständen beleuchteten Bildern der Gegenstandsoberfläche zu berechnen. Auf diese Weise ist es mithilfe der verschiedenen, versetzt zueinander angeordneten Kameras beziehungsweise alternativ oder zusätzlich mithilfe der Beleuchtungen aus verschiedenen Abständen relativ zu der Gegenstandsoberfläche ohne weiteres möglich, zusätzlich zu den Neigungsinformationen auch Höheninformationen über die Gegenstandsoberfläche zu erhalten. Diese Informationen können dann ohne weiteres zu einer vollständigen Form der Gegenstandsoberfläche zusammengefügt werden.

Besonders bevorzugt wird ein Ausführungsbeispiel der Vorrichtung, bei dem mindestens vier Beleuchtungselemente paarweise derart angeordnet sind, dass ein erstes Paar von Beleuchtungselementen in einem ersten Abstand zu der Gegenstandsoberfläche angeordnet ist, wobei ein zweites Paar von Beleuchtungselementen einem zweiten Abstand zu der Gegenstandsoberfläche angeordnet ist. Dabei ist der erste Abstand von dem zweiten Abstand verschieden. Die Abstände werden vorzugsweise in Richtung der optischen Achse gemessen. Das erste Paar von Beleuchtungselementen ist vorzugsweise kreuzförmig angeordnet, wobei die Beleuchtungselemente einen Winkel miteinander einschließen, der von 0° verschieden ist. Alternativ oder zusätzlich ist das zweite Paar von Beleuchtungselementen ist vorzugsweise kreuzförmig angeordnet, wobei die beiden Beleuchtungselemente einen Winkel miteinander einschließen, der von 0° verschieden ist. Die Recheneinrichtung ist ausgebildet, um eine Höheninformation über die Gegenstandsoberfläche aus mit verschiedenem Abstand beleuchteten Bildern der Gegenstandsoberfläche zu berechnen.

Es ist auch ein Ausführungsbeispiel der Vorrichtung möglich, bei welchem drei oder mehr Paare von Beleuchtungselementen derart angeordnet sind, dass zwei vorzugsweise kreuzförmig ausgebildete Paare von Beleuchtungselementen in derselben Ebene angeordnet sind, um einen vergrößerten Winkelbereich in Hinblick auf die Oberflächenneigung zu erfassen, wobei ein drittes, vorzugsweise kreuzförmig angeordnetes Paar von Beleuchtungselementen in einer anderen Ebene mit anderem Abstand zu der Gegenstandsoberfläche angeordnet ist, um aus mit verschiedenem Abstand beleuchteten Bildern Höheninformationen über die Gegenstandsoberfläche zu gewinnen.

Es wird auch eine Vorrichtung bevorzugt, die sich dadurch auszeichnet, dass mindestens ein linienförmiges Beleuchtungselement eine gekrümmte Form aufweist. Besonders bevorzugt weisen zwei linienförmige Beleuchtungselemente, die vorzugsweise kreuzförmig zueinander angeordnet sind, eine gekrümmte Form auf. Dabei schließt das Beleuchtungselement vorzugsweise einen konkaven Bereich ein, in dem die Gegenstandsoberfläche angeordnet ist. Auf diese Weise sind auch große Winkelbereiche in Hinblick auf die Oberflächenneigung erfassbar, weil eine größere Vielfalt von Beleuchtungsrichtungen im Vergleich zu einem sich entlang einer geraden Linie erstreckenden Beleuchtungselement gegeben ist.

Vorzugsweise überstreicht das mindestens eine, gekrümmte Beleuchtungselement - entlang der Linienform gesehen - einen Winkelbereich von mindestens 0° bis höchstens 360°, vorzugsweise von mindestens 0° bis höchstens 180°, wobei es besonders bevorzugt die Form eines Halbkreisbogens aufweist. Die Gegenstandsoberfläche ist dann innerhalb des Halbkreisbogens angeordnet und kann so aus einem sehr großen Bereich von Beleuchtungsrichtungen, besonders bevorzugt von 0° bis 180°, beleuchtet werden.

Noch größere Winkelbereiche in Hinblick auf die Oberflächenneigung können erfasst werden, wenn sich ein gekrümmtes Beleuchtungselement über einen größeren Winkelbereich erstreckt. Dabei ist bevorzugt mindestens eines der Beleuchtungselemente kreisförmig ausgebildet, sodass Beleuchtungsrichtungen von 0° bis 360° möglich sind.

Besonders bevorzugt sind zwei Beleuchtungselemente entsprechend gekrümmt ausgebildet und angeordnet, wobei sie lokal an dem Punkt, an welchem sie sich kreuzen, einen Winkel miteinander einschließen, der von 0° verschieden ist und besonders bevorzugt 90° beträgt. Auch die gekrümmten Beleuchtungselemente sind demnach vorzugsweise kreuzförmig relativ zueinander angeordnet - insbesondere in Projektion auf die Gegenstandsoberfläche gesehen.

Es wird auch ein Ausführungsbeispiel der Vorrichtung bevorzugt, bei welchem wenigsten ein linienförmiges Beleuchtungselement entlang einer Schraubenlinie im Raum verläuft. Besonders bevorzugt verlaufen mindestens zwei, vorzugsweise genau zwei oder mehr als zwei, linienförmige Beleuchtungselemente entlang von Schraublinien im Raum. Ein solcher schraubenförmiger Verlauf entsteht beispielsweise, wenn man zunächst eine der zuvor beschriebenen, ebenen Beleuchtungsanordnungen annimmt, wobei ein Winkel zwischen verschiedenen Beleuchtungselementen beziehungsweise deren Steigung verschiedene Werte annehmen kann. Die Ebene, in der die linienförmigen Beleuchtungselemente liegen, wird zu einer zylindrischen Mantelfläche aufgerollt. Die linienförmigen Beleuchtungselemente folgen nun der Form von Schraubenlinien. Besonders bevorzugt weist die Vorrichtung eine Mantelfläche auf, die einem Tunnel gleicht, und an der wenigstens ein schraubenlinienförmiges Beleuchtungselement angeordnet ist. Besonders bevorzugt weist die Vorrichtung einen Tunnel auf, der die entsprechende Mantelfläche bereitstellt, wobei die Bewegung des Gegenstands in Richtung einer Symmetrieachse durch den vorzugsweise zylindrischen Tunnel beziehungsweise die vorzugsweise zylindrische Mantelfläche erfolgt. Alternativ oder zusätzlich erfolgt die Bewegung vorzugsweise im Wesentlichen um die Symmetrieachse, bevorzugt um die Symmetrieachse des Tunnels oder der Mantelfläche, und/oder im Wesentlichen um eine Symmetrieachse des Gegenstands, bevorzugt um die Symmetrieachse des Gegenstands. Alternativ oder zusätzlich ist auch eine außermittige, nicht zentrierte oder asymmetrische Drehbewegung des Gegenstands möglich. Besonders bevorzugt sind dabei zwei oder mehr, insbesondere alle Beleuchtungselemente auf der Mantelfläche beziehungsweise an dem Tunnel angeordnet. Eine solche Vorrichtung ist bei räumlich kleiner Ausführung geeignet für kleine Prüfgegenstände, beispielsweise Smartphones und Tablet-PCs, bei entsprechend großer Ausführung allerdings auch für entsprechend große Prüfgegenstände, beispielsweise für ganze Kraftfahrzeuge und/oder Kraftfahrzeug-Karosserien, die durch den Tunnel bewegt werden oder sich aus eigener Kraft selbst durch den Tunnel bewegen. Beispielsweise ist es möglich, dass im Rahmen einer Hagelschadenerkennung eines fertigen Kraftfahrzeugs dieses von einem Fahrer oder einer Transporteinrichtung durch den Tunnel der Vorrichtung gefahren wird, wobei die Hagelschadenerkennung im Rahmen des Verfahrens durchgeführt wird.

Mit Hilfe der schraubenförmigen Beleuchtung ist es insbesondere möglich, Messungen zugleich in Reflexion und in Transmission durchzuführen, ohne dass hierfür zwei Kameras vorgesehen sein müssen. Es sind nämlich - entlang einer Schraubenlinie - Beleuchtungsrichtungen von 0° bis 360° möglich. Somit kann beispielsweise von einer oben in den Tunnel hinein blickenden Kamera auch Licht erfasst werden, welches von einem der Kamera gegenüberliegenden, unteren Bereich eines Beleuchtungselements ausgesandt wird und den zu prüfenden Gegenstand transmittiert.

Insbesondere bei einer solchen schraubenlinienförmigen Beleuchtung ist es möglich, eine Reflexion an einer der Kamera zugewandten Vorderseite des Gegenstands zu unterscheiden von einer Beleuchtung einer der Kamera abgewandten Rückseite desselben. Insbesondere können die Positionen eines solchen vorderseitigen Reflexes einerseits und einer Beleuchtungslinie der rückseitigen Beleuchtung andererseits voneinander separiert werden. Weiterhin ist mithilfe der schraubenlinienförmigen Beleuchtungen ohne weiteres auch eine Erfassung weiter Bereiche von Oberflächenneigungen und/oder -winkeln insbesondere von mehr als 45° abweichend von einer horizontalen Orientierung, mithin einer Orientierung entlang einer Haupterstreckung der untersuchten Gegenstandsoberfläche, möglich.

Vorzugsweise sind mehrere Beleuchtungselemente oder mehrere Paare von Beleuchtungselementen vorgesehen, die in Richtung einer Zylinder- oder Symmetrieachse und/oder in Richtung des Umfangs der Mantelfläche zueinander versetzt angeordnet sind.

Es ist auch möglich, dass die Schraubenlinie durch einen Polygonzug oder einen anderen Verlauf angenähert wird, wobei beispielsweise Beleuchtungsteilelemente entlang von Geradenstücken angeordnet sind, die zusammen näherungsweise eine Schraubenlinie bilden. Entsprechend kann/können auch die Mantelfläche und/oder der Tunnel einer Zylinderform angenähert, insbesondere polygonal ausgebildet sein.

Auch eine Anordnung von Beleuchtungselementen auf einer annähernd kugelförmigen oder kugelförmigen - gegebenenfalls gedachten oder realen - Fläche ist möglich.

Mithilfe der Vorrichtung und/oder des Verfahrens ist es insbesondere auch möglich, medizinische Vorrichtungen oder Geräte zu untersuchen, wobei insbesondere höchste Inspektionsanforderungen in Hinblick auf eine funktionelle und optische Qualität von polierten Oberflächen erfüllt werden können. Weiterhin können die Vorrichtung und das Verfahren angewendet werden, um Haushaltsgeräte, wie beispielsweise Schneidwaren, insbesondere Besteck, oder Oberflächen, die matt gebürsteten Edelstahl aufweisen oder aus matt gebürstetem Edelstahl bestehen, beispielsweise Frontflächen von Kühlschränken, zu prüfen.

Schließlich wird eine Vorrichtung bevorzugt, die sich dadurch auszeichnet, dass die Kamera als Matrixkamera ausgebildet ist. Alternativ ist es möglich, dass die Kamera als Zeilenkamera ausgebildet ist, insbesondere als Zeilenkamera mit mehreren Zeilen. Während grundsätzlich eine Matrixkamera für die Auswertung und Erfassung der im Rahmen des Verfahrens gewonnen beziehungsweise benötigten Daten geeigneter erscheint, hat eine Zeilenkamera den Vorteil, dass sie mit schnellerer Bildwiederholrate betätigbar ist. Insbesondere mit modernen Zeilenkameras sind Bildwiederholfrequenzen von bis zu 100 kHz möglich.

Es wird ein Ausführungsbeispiel der Vorrichtung bevorzugt, bei welchem die Kamera eine integrierte, im Anwendungsfeld programmierbare Gatter-Anordnung, nämlich ein sogenanntes Field-Programmable Gate Array (FPGA) aufweist. Diese Ausgestaltung ist in Hinblick auf das Verfahren besonders günstig, weil dann sehr schnell noch während der Durchführung des Verfahrens eine hardwarebasierte Auswertung der Einzelbilder in der Kamera selbst erfolgen kann. Insbesondere ist es möglich, lokale Maxima der Beleuchtungsstärke in den Einzelbildern unmittelbar nach deren Aufnahme noch in der Kamera selbst aufzusuchen und die von der Kamera an die Recheneinrichtung übermittelten Daten zu reduzieren, indem nicht die gesamten Bilder, sondern nur noch die Positionen der lokalen Maxima übertragen werden. Dies führt zu einer wesentlichen Beschleunigung des Verfahrens und dazu, dass dieses weniger Speicherkapazität benötigt. Allgemein weist die Kamera vorzugsweise ein integriertes Rechenelement auf, welches zur Vorauswertung der aufgenommenen Bilder, insbesondere zur Bestimmung lokaler Maxima in den Bildern, ausgebildet ist. Alternativ kann ein solches Rechenelement, insbesondere ein FPGA, auch auf einer Bildeinzugskarte (frame grabber) vorgesehen sein.

Bei einem bevorzugten Ausführungsbeispiel der Vorrichtung ist die Kamera als Spezialkamera für ein Laserlichtschnittverfahren ausgebildet. Eine solche Kamera ist zur hardwarebasierten, integrierten Auswertung der aufgenommenen Einzelbilder in besonderer Weise geeignet.

Es wird auch eine Verwendung von einem der zuvor beschriebenen Ausführungsbeispiele der Vorrichtung und/oder eine Anwendung von einer der zuvor beschriebenen Ausführungsformen des Verfahrens für eine Produktprüfung und/oder eine Schadenserkennung bevorzugt. Insbesondere wird eine Verwendung oder Anwendung zur Endprüfung eines Kraftfahrzeugs, insbesondere einer Fahrzeugkarosserie, eines Mobiltelefons, insbesondere eines Smartphones, eines Tablet-PCs, oder eines optischen Elements, insbesondere einer optischen Linse, bevorzugt. Eine Verwendung oder Anwendung im Rahmen einer Schadenserkennung wird besonders bevorzugt im Rahmen einer Schadensregulierung durchgeführt. Insbesondere ist es möglich, dass die Vorrichtung und/oder das Verfahren für eine Hagelschadenerkennung bei Kraftfahrzeugen, insbesondere bei Personenkraftwagen, verwendet wird/werden.

Die Beschreibung des Verfahrens einerseits und der Vorrichtung andererseits sind komplementär zueinander zu verstehen. Insbesondere sind Vorrichtungsmerkmale, die explizit oder implizit in Zusammenhang mit dem Verfahren beschrieben wurden, bevorzugt einzeln oder in Kombination miteinander Merkmale eines bevorzugten Ausführungsbeispiels der Vorrichtung. Umgekehrt sind Verfahrensschritte, die explizit oder implizit in Zusammenhang mit der Vorrichtung beschrieben wurden, bevorzugt einzeln oder in Kombination miteinander Schritte einer bevorzugten Ausführungsform des Verfahrens. Die Vorrichtung zeichnet sich vorzugsweise durch wenigstens ein Merkmal aus, das durch wenigstens einen Verfahrensschritt einer Ausführungsform des Verfahrens bedingt ist. Das Verfahren zeichnet sich vorzugsweise durch wenigstens einen Verfahrensschritt aus, der durch wenigstens ein Merkmal der Vorrichtung bedingt ist.

Die Vorrichtung und das Verfahren sind auch geeignet für Oberflächen mit stark unterschiedlichem Reflexionsgrad. So reflektiert eine schwarze, diffuse Oberfläche um Größenordnungen weniger Licht als eine metallische, optisch glatte Oberfläche.

Die Erfindung wird im Folgenden anhand der Zeichnung näher erläutert. Dabei zeigen:

Figur 1a) eine schematische Seitenansicht eines ersten Ausführungsbeispiels einer Vorrichtung;

Figur 1b) eine schematische Draufsicht auf das erste Ausführungsbeispiel;

Figur 2 eine schematische Darstellung einer Abstrahlcharakteristik einer optisch rauen Gegenstandsoberfläche;

Figur 3 eine schematische Darstellung einer Abstrahlcharakteristik einer glänzenden Gegenstandsoberfläche;

Figur 4 eine schematische Darstellung einer Abstrahlcharakteristik einer optisch glatten Gegenstandsoberfläche;

Figur 5 eine schematische Darstellung einer im Rahmen des Verfahrens aufgenommenen Bildfolge vor einer Rückverschiebung;

Figur 6 eine schematische Darstellung der im Rahmen des Verfahrens aufgenommenen Bildfolge gemäß Figur 5, jedoch nach der Rückverschiebung, mithin eine rückverschobene Bildfolge;

Figur 7a) eine schematische Seitenansicht eines zweiten Ausführungsbeispiels der Vorrichtung;

Figur 7b) eine schematische Draufsicht auf das zweite Ausführungsbeispiel;

Figur 8a) eine schematische Seitenansicht eines dritten Ausführungsbeispiels der Vorrichtung;

Figur 8b) eine schematische Draufsicht auf das dritte Ausführungsbeispiel;

Figur 9a) eine schematische Seitenansicht eines vierten Ausführungsbeispiels der Vorrichtung;

Figur 9b) eine schematische Draufsicht auf das vierte Ausführungsbeispiel;

Figur 10 eine schematische Darstellung eines Ausführungsbeispiels für eine Leuchtdichteverteilung eines Beleuchtungselements;

Figur 11 eine schematische Darstellung eines Ausführungsbeispiels einer Anordnung zweier Beleuchtungselemente, und

Figur 12 eine schematische Darstellung eines fünften Ausführungsbeispiels der Vorrichtung.

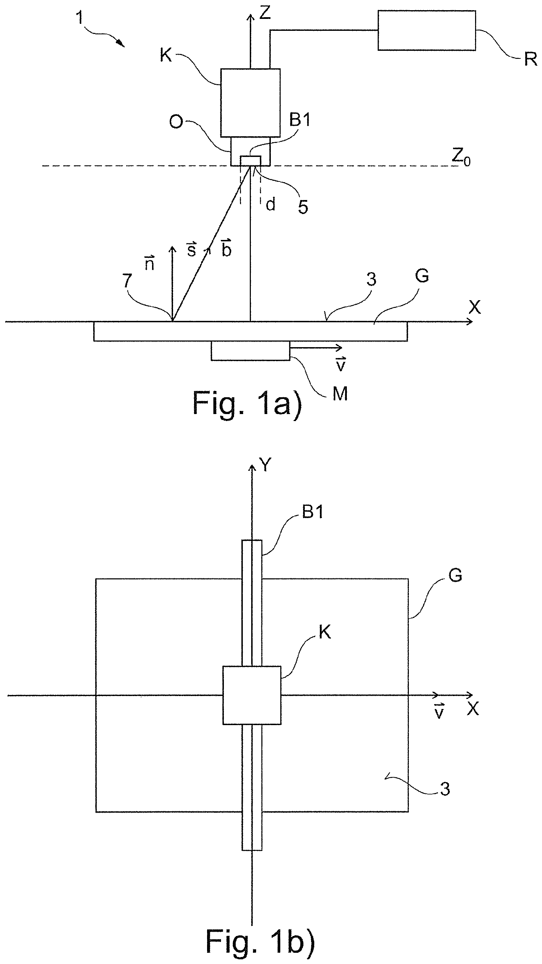

Das Ausführungsbeispiel der Vorrichtung gemäß Figur 1 umfasst zumindest eine optische Kamera K, zumindest ein Objektiv O, mindestens ein Beleuchtungselement, hier vorzugsweise zwei Beleuchtungselemente B1, B2, von denen hier zur Vereinfachung der Darstellung zunächst nur ein erstes Beleuchtungselement B1 dargestellt ist, eine Bewegungseinrichtung M und eine Recheneinrichtung R. Die Kamera K kann als Matrixkamera oder als Zeilenkamera ausgebildet sein. Vorzugsweise kommt eine Matrixkamera zum Einsatz.

Mit der Bewegungseinrichtung M ist hier ein Gegenstand G entlang einer Bewegungsrichtung verlagerbar, die in Figur 1 horizontal orientiert ist und in Richtung der positiven X-Koordinate weist. Die Bewegungsrichtung ist hier dargestellt durch einen Geschwindigkeitsvektor $\vec{v}$.

Die Recheneinrichtung R ist mit der Kamera K und bevorzugt auch mit den Beleuchtungselementen, hier konkret mit dem Beleuchtungselement B1 wirkverbunden. Besonders bevorzugt ist die Recheneinrichtung R mit der Bewegungseinrichtung M wirkverbunden, sodass die Relativbewegung mit der Beleuchtung und dem Auslösen der Kamera K durch die Recheneinrichtung R synchronisiert werden kann.

Der Gegenstand G weist eine Gegenstandsoberfläche 3 auf, die durch die Beleuchtungselemente B1, B2 beleuchtbar und durch die Kamera K aufnehmbar ist.

Die Beleuchtungselemente B1, B2 weisen eine vorgegebene geometrische Form einer leuchtenden Fläche 5 auf. Bevorzugt wird eine geometrische Form, bei der die leuchtende Fläche 5 linienhaft ausgedehnt ist. Anders als bei üblichen Linienbeleuchtungen wird dabei das Licht der leuchtenden Fläche 5 vorzugsweise diffus und ungerichtet abgegeben. Vorzugsweise wird diese Linienbeleuchtung gebildet von einer Vielzahl entlang einer Linie angeordneter Beleuchtungsteileelemente beziehungsweise Lichtquellen wie beispielsweise LEDs, OLEDs oder Laserlichtquellen. Vorzugsweise ist die Abstrahlcharakteristik dieser Lichtquellen eine Lambertsche oder eine Gleichverteilung in alle Raumrichtungen. Die leuchtende Fläche 5, die auch als Beleuchtungslinie bezeichnet wird, weist die Breite d auf. Es kann zusätzlich ein streuendes Element vor den Lichtquellen vorgesehen sein, um eine gleichmäßige Leuchtdichte zu erreichen. Ebenso kann eine Blende, insbesondere eine rechteckförmige Blende vorgesehen sein, um die Breite d der leuchtenden Fläche 5 zu begrenzen. Weiterhin können andere optische Element vorgesehen sein. Eine Laserlichtquelle ist in der Regel stark gerichtet. Durch ein optisches Element kann der Strahlengang hier aber so aufgeweitet werden, dass Licht in einen breiten Raumwinkel abgestrahlt wird. Alternativ kann eine fokusierte Laserlinie auf eine Streuscheibe oder ähnliches abgebildet werden, was wiederum wie eine leuchtende Linie mit diffuser Abstrahlung wirkt.

Das Licht der Linienbeleuchtung fällt auf den Gegenstand G und wird an dessen Gegenstandsoberfläche 3 gestreut (optisch raue Oberfläche), reflektiert (optisch glatte Oberfläche) oder beides (glänzende Oberfläche). Je nach lokaler Neigung der Gegenstandsoberfläche 3 gelangt Licht durch Streuung und/oder Reflexion über das Objektiv O zur Kamera K. Die lokale Neigung der Gegenstandsoberfläche 3 für einen beliebigen Punkt derselben mit den Koordinaten (X, Y, Z) mithin einen Gegenstandsort 7, wird beschrieben durch den Normalenvektor $\vec{n} = (n_1, n_2, n_3)^T$. Die Richtung von dem Gegenstandsort 7 in Richtung der Beleuchtung, mithin die Beleuchtungsrichtung, wird bezeichnet mit dem Vektor $\vec{s} = (s_1, s_2, s_3)^T$, die Richtung zur Beobachtung (Eintrittspupille des Objektivs O), mithin die Beobachtungsrichtung, wird bezeichnet mit dem Vektor $\vec{b} = (b_1, b_2, b_3)^T$. Die Eintrittspupille des Objektivs O befinde sich in einer Höhe $Z_O$ über der Gegenstandsoberfläche 3 und hat einen hier nicht dargestellten Durchmesser D. Bei einem bevorzugten Ausführungsbeispiel befindet sich das Beleuchtungselement B1 in der Höhe $Z_O$ über der Gegenstandsoberfläche 3. Alternativ sind andere Positionen möglich. Bevorzugt befindet sich auch das in Figur 1 nicht dargestellte, zweite Beleuchtungselement B2 in derselben Höhe $Z_O$ über der Gegenstandsoberfläche 3. Besonders bevorzugt sind die beiden Beleuchtungselemente B1, B2 kreuzförmig zueinander angeordnet. Dabei ist es möglich, dass das zweite Beleuchtungselement B2 parallel zu der Bewegungsrichtung orientiert ist. Es ist aber auch möglich, dass es schräg zu der Bewegungsrichtung angeordnet ist.

Vorzugsweise wird ein Fokus des Objektivs O so gewählt, dass sich die Gegenstandsoberfläche 3 in oder nahe um die Fokusebene befindet. Dadurch wird die Gegenstandsoberfläche 3 kontrastreich dargestellt und fein aufgelöst. Dies bedingt allerdings, dass das Abbild der Beleuchtungslinie bei einer optisch glatten Oberfläche in der Regel mehr oder weniger verschwommen erscheint. Jeder Punkt der Beleuchtungslinie verschwimmt zu einer leuchtenden Kreisscheibe, dem sogenannten Unschärfescheibchen. Ist eine als kreisförmig angenommene Eintrittspupille und damit eine Objektivblende der Kamera K weit geöffnet, so hat das Unschärfescheibchen einen großen Durchmesser. Ist die Eintrittspupille und damit die Objektivblende auf einen kleinen Durchmesser reduziert, so besitzt auch das Unschärfescheibchen einen geringen Durchmesser. In bestimmten Fällen (ebener Gegenstand G, Abstand der Kamera K zum Gegenstand G entspricht dem Abstand der Beleuchtungselemente B1, B2 zum Gegenstand G) ist der scheinbare Durchmesser des Unschärfescheibchens auf der Beleuchtung ebenso groß im Durchmesser wie der Durchmesser der Eintrittspupille D. Auch bei anders geformten Gegenständen G, beispielsweise einer Kugel und sogar allgemein bei Freiformflächen kann diese Beziehung unter bestimmten Umständen erfüllt sein. Vorteilhaft ist es dann, wenn die Breite d der leuchtenden Fläche 5 gleich dem Durchmesser der Eintrittspupille ist, diesem näherungsweise gleich ist, oder dieselbe Größenordnung aufweist. Eine wesentlich schmalere Linie wird ohnehin durch das Unschärfescheibchen auf den Durchmesser des Unschärfescheibchens aufgeweitet.

Alternativ kann die Fokusebene auch so justiert werden, dass sie in einem Bereich zwischen den Beleuchtungselementen B1, B2 und der Gegenstandsoberfläche 3 liegt. Dann werden sowohl die Gegenstandsoberfläche 3 als auch die Beleuchtungselemente B1, B2 mehr oder weniger leicht unscharf dargestellt, das Unschärfescheibchen der Beleuchtung kann aber reduziert werden. Dementsprechend ist hier dann eine Beleuchtungslinie mit geringerer Breite d sinnvoll, um die Neigung mit einer geringeren Messunsicherheit bestimmen zu können. Eine verschlechterte Ortsauflösung auf der Gegenstandsoberfläche 3 wird hier eingetauscht gegen eine verbesserte Winkelauflösung der Neigung. Wird die Blendenöffnung des Objektivs O verengt, so steigt der Bereich der Schärfentiefe, und sowohl die Unschärfe der Gegenstandsoberfläche 3 als auch der Beleuchtungselemente B1, B2 sinkt. Bei sehr kleinen Blendenöffnungen tritt dann allerdings verstärkt Beugung an der Blende auf, so dass hierdurch wiederum Unschärfe entsteht. Ebenso sinkt die von der Kamera K aufgenommene Beleuchtungsstärke beziehungsweise die Belichtungszeit muss erhöht werden. Es ist deshalb eine sinnvolle Wahl des Blendendurchmessers und der Lage des Fokus vorzunehmen.

Alternativ kann die Lage der Fokusebene auch im Bereich der Beleuchtungselemente B1, B2 gewählt werden. Dies ist dann sinnvoll, wenn es um feinste Winkelauflösungen geht und die Ortsauflösung auf der Gegenstandsoberfläche 3 von untergeordneter Bedeutung ist. In diesem Fall kann es sinnvoll sein, die Breite d minimal zu wählen.

Bei einer optisch glatten Oberfläche gelangt nur Licht von ausgewählten Punkten der Gegenstandsoberfläche 3 zur Kamera K, nämlich dort wo das Reflexionsgesetz bezüglich Beleuchtungsrichtung $\vec{s}$, Oberflächennormale $\vec{n}$ und Beobachtungsrichtung $\vec{b}$ erfüllt ist.

Auf einer ebenen spiegelnden Fläche (ebener Spiegel) beispielsweise erhält man als Abbild der linienförmigen, geraden leuchtenden Fläche 5 des Beleuchtungselements B1 wieder die Form einer geraden Linie. Auf einer kugelförmigen spiegelnden Oberfläche (beispielsweise eine Kugellagerkugel) ist das Abbild dagegen eine mehr oder weniger gebogene Linie. Auf einer spiegelnden Freiformfläche (beispielsweise eine Autokarosserie mit schwarzem, einfarbigem Lack) erhält man ein in der Regel ein unregelmäßig gebogenes Abbild.

Bei einer optisch rauen Oberfläche (beispielsweise einem Blatt Papier) gelangt in der Regel Licht von allen Bereichen der Gegenstandsoberfläche 3 zur Kamera K. Die Leuchtdichte eines Punkts der Gegenstandsoberfläche 3 variiert dabei gemäß dem Prinzip des photometrischen Stereoverfahrens mit dem Winkel, der zwischen Beleuchtungsrichtung $\vec{s}$ und Oberflächennormale $\vec{n}$ eingeschlossen wird (EP 1 567 827 A1). Eine weitere Abhängigkeit besteht zur Abstrahlcharakteristik der Beleuchtungselemente B1, B2 und der Richtung der Abstrahlung.

Bei einer glänzenden Oberfläche wird Licht sowohl diffus gestreut als auch gerichtet reflektiert. Neben dem Abbild der leuchtenden Fläche 5 durch Reflexion gelangt gestreutes Licht vor allem aus der Nachbarschaft derselben zur Kamera K in Abhängigkeit von einer typischen Streukeule der Gegenstandsoberfläche 3. Dies kann dazu führen, dass die Linie unscharf begrenzt und verbreitert erscheint (beispielsweise bei einer Autokarosserie mit Metalliclackierung). Es kann sogar ein diffuser Anteil der gesamten Gegenstandsoberfläche 3 im gesamten Kamerabild sichtbar sein (Autokarosserie mit weißem Lack).

Um den Gegenstand G unabhängig von seinen Oberflächeneigenschaften an seiner gesamten für die Kamera K sichtbaren Gegenstandsoberfläche 3 erfassen zu können, ist es nicht ausreichend, wenn die Linienbeleuchtung in Form einer einzigen, mehr oder weniger verformten und verbreiterten Linie sichtbar ist. Vielmehr soll Information flächig für alle Punkte der Gegenstandsoberfläche 3 gewonnen werden. Bevorzugt wird hierzu der Gegenstand G relativ zur Anordnung bestehend aus der Kamera K, dem Objektiv O und den Beleuchtungselementen B1, B2 mit Hilfe der Bewegungseinrichtung M bewegt. Die Geschwindigkeit der Bewegung wird bezeichnet mit dem Vektor $\vec{v}$. Eine solche Relativbewegung ist gegeben, wenn der Gegenstand G bewegt wird und die Anordnung stillsteht. Alternativ kann der Gegenstand G stillstehen und die Anordnung bewegt werden. Selbstverständlich können auch beide mit unterschiedlicher Richtung oder Geschwindigkeit bewegt werden. Ebenso kann die Relativbewegung gegeben sein durch eine externe Bewegungseinrichtung, die nicht Bestandteil der Vorrichtung ist. Alternativ können auch Gegenstand G, Kamera K und Objektiv O stillstehen, wobei die Beleuchtungselemente B1, B2 relativ dazu bewegt werden.

In einer bevorzugten Ausführungsform erfolgt die Bewegung linear, das heißt entlang einer Gerade. In einer bevorzugten Ausführungsform wird der Gegenstand G dabei von Kamerabild zu Kamerabild immer genau um denselben Abstand weiterbewegt, insbesondere um einen Abstand, welcher dem gegenstandsseitigen Pixelabstand $\Delta X$ der Kamera K entspricht. Der Gegenstand G erscheint daher von einem Kamerabild zum nächsten um genau einen Pixelabstand $\Delta x$ in der Bildebene verschoben. Damit ist sichergestellt, dass der Gegenstand G und das Abbild der linienförmigen leuchtenden Fläche 5 sehr engmaschig erfasst werden.

Mit Großbuchstaben X, Y, Z werden generell Koordinaten im realen Raum, insbesondere auf der Gegenstandsoberfläche 3 angesprochen, während Kleinbuchstaben x, y Koordinaten in der Bildebene bezeichnen.

In einer anderen bevorzugten Ausführungsform kann der Abstand als ein ganzzahliges oder auch nicht ganzzahliges Vielfaches des gegenstandsseitigen Pixelabstandes $\Delta X$ gewählt werden. Vorzugsweise wird der Abstand so gewählt, dass er der scheinbaren Breite der Beleuchtungslinie, also der linienförmigen leuchtenden Fläche 5, auf der Gegenstandsoberfläche 3 entspricht, näherungsweise entspricht oder in derselben Größenordnung liegt. Hierdurch werden nämlich die Anzahl der notwendigen Bewegungsschritte, die Anzahl der Bildaufnahmen und damit die benötigte Zeit wesentlich reduziert. Ebenso kann der Abstand auch einen Bruchteil der scheinbaren Breite einer Beleuchtungslinie betragen, nämlich dann, wenn mehrere Beleuchtungslinien verwendet werden. Bevorzugt wird eine Ausführungsform, bei welcher der Abstand der scheinbaren Breite der Beleuchtungslinie dividiert durch die Anzahl der Beleuchtungselemente B1, B2 entspricht, näherungsweise entspricht oder in dieser Größenordnung liegt. Hierauf wird im Zusammenhang mit mehreren Linienbeleuchtungen noch eingegangen. Die scheinbare Breite der Beleuchtungslinie auf dem Gegenstand G ist nicht nur abhängig von der wahren, leuchtenden Breite d beziehungsweise der vorgeschalteten Blende, sondern ebenso von den optischen Eigenschaften der Gegenstandsoberfläche 3. Bei einer glänzenden oder sogar optisch rauen Gegenstandsoberfläche ist die scheinbare Breite der Beleuchtungslinie erhöht, welche von der Kamera K aus gesehen auf der Gegenstandsoberfläche 3 sichtbar ist. Im Fall einer optisch rauen Oberfläche, insbesondere einem lambertschen Streuer, kann sich die verbreiterte Linie über den gesamten sichtbaren Bereich der Gegenstandsoberfläche 3 erstrecken. Es gelangen nicht nur Lichtstrahlen in die Kamera K, bei denen das Reflexionsgesetz exakt erfüllt, sondern auch Strahlen, bei denen das Reflexionsgesetz nur näherungsweise erfüllt ist (glänzende Oberfläche) oder gar nicht mehr erfüllt ist (optisch raue Oberfläche).

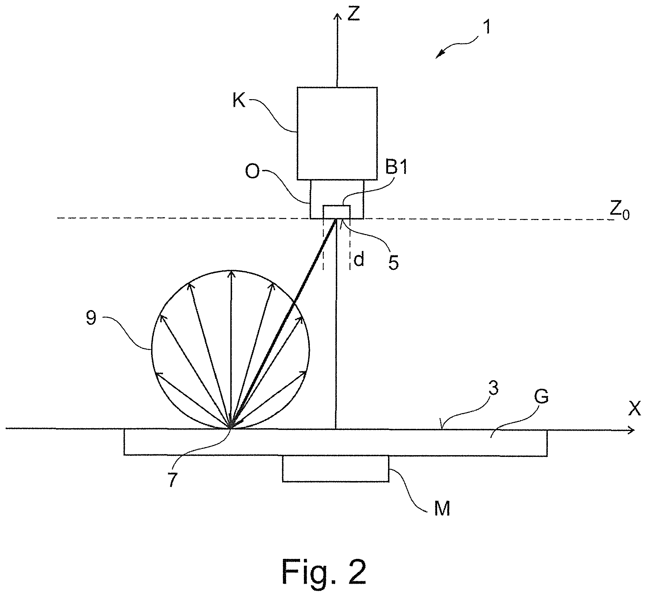

Figur 2 zeigt eine schematisch dargestellte Abstrahlcharakteristik einer optisch rauen, diffus reflektierenden Lambertschen Gegenstandsoberfläche 3. Gleiche und funktionsgleiche Elemente sind mit gleichen Bezugszeichen versehen, sodass insofern auf die vorangegangene Beschreibung verwiesen wird. Der einfallende Strahl ausgehend von dem Beleuchtungselement B1 wird in alle Raumrichtungen des Halbraums gestreut. Dabei variiert die rückgestreute Leuchtdichte gemäß einer Streukeule 9 mit dem Cosinus des Winkels, der zwischen Oberflächennormale und rückgestreutem Strahl eingeschlossen wird.

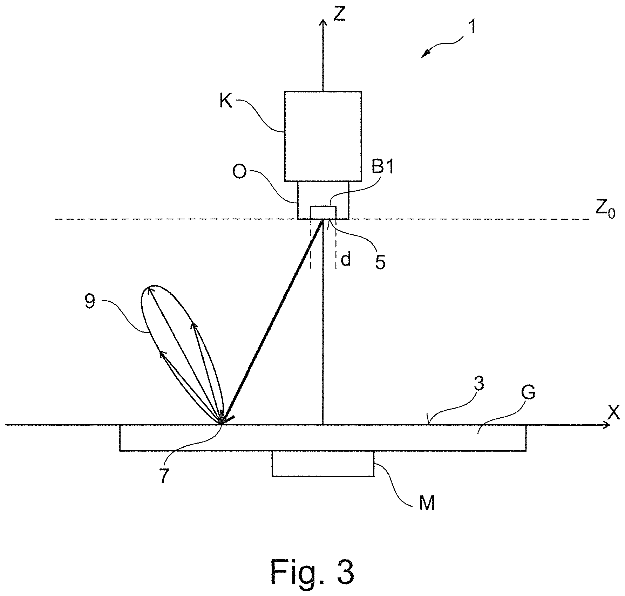

Figur 3 zeigt eine schematisch dargestellte Abstrahlcharakteristik einer glänzenden Oberfläche. Gleiche und funktionsgleiche Elemente sind mit gleichen Bezugszeichen versehen, sodass insofern auf die vorangegangene Beschreibung verwiesen wird. Das Maximum der rückgestreuten Leuchtdichte tritt bei demjenigen Winkel auf, bei dem das Reflexionsgesetz erfüllt ist. In der Nachbarschaft zu diesem Winkel wird ebenfalls noch eine rückgestreute Leuchtdichte festgestellt, die entsprechend der Streukeule 9 variiert.

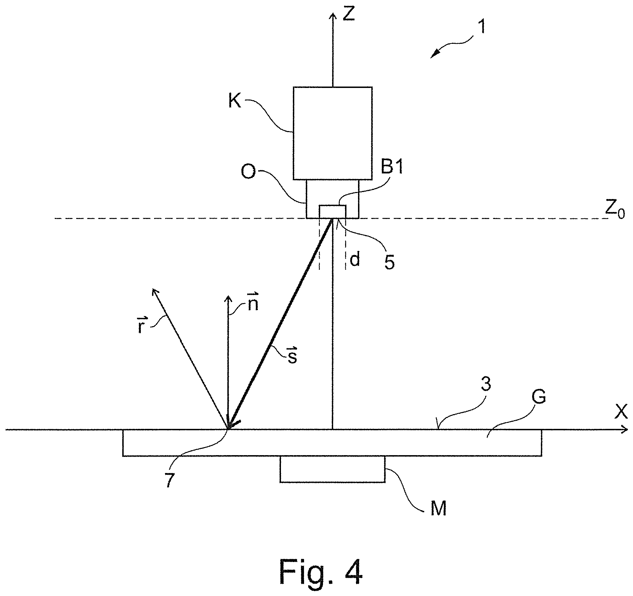

Figur 4 zeigt eine schematisch dargestellte Abstrahlcharakteristik einer optisch glatten Oberfläche. Gleiche und funktionsgleiche Elemente sind mit gleichen Bezugszeichen versehen, sodass insofern auf die vorangegangene Beschreibung verwiesen wird. Einfallender Strahl $\vec{s}$ , Oberflächennormale $\vec{n}$ und reflektierter Strahl $\vec{r}$ genügen dem Reflexionsgesetz. Die Leuchtdichte ist maximal für den Strahl, welcher dem Reflexionsgesetz genügt, für alle anderen Winkel ist die Leuchtdichte Null.

Neben diesen drei grundlegenden Abstrahlcharakteristiken der Gegenstandsoberfläche 3 sind auch Mischformen daraus möglich. Beispielsweise kann ein diffus reflektierender Anteil mit glänzenden Anteilen kombiniert sein. Die Charakteristiken der beiden Anteile sind dann zu überlagern. Es ergibt sich für diesen Fall ein Cosinusförmiger Verlauf mit einer Überhöhung bedingt durch die Streukeule 9 des glänzenden Anteils.

In einer anderen bevorzugten Ausführungsform erfolgt die Bewegung in Form einer Rotation, insbesondere einer Rotation um die Y-Achse oder näherungsweise um die Y-Achse. Diese Art der Bewegung bietet sich an, um einen Gegenstand G rundum zu erfassen. Die Gegenstandsoberfläche 3 ist in diesem Fall bevorzugt als Mantelfläche des Gegenstands G ausgebildet. Insbesondere bietet sich diese Bewegung an, wenn es sich um einen rotationssymmetrischen Gegenstand handelt, dessen Symmetrieachse der Rotation bevorzugt mit der Drehachse der Rotation, insbesondere der Y-Achse übereinstimmt. In einer bevorzugten Ausführungsform wird der Gegenstand G dabei von Kamerabild zu Kamerabild um denselben Winkel weitergedreht, insbesondere um einen Winkel, der so gewählt ist, dass sich der Gegenstand G an seinem von der Kamera sichtbaren Umfang um den gegenstandsseitigen Pixelabstand ΔX der Kamera K weiterbewegt. Diese Bedingung kann streng betrachtet nur bei einem rotationssymmetrischen Gegenstand G mit konstantem Durchmesser, insbesondere einem Zylinder, eingehalten werden und dort wiederum für Punkte, deren X-Koordinate Null ist im Fall der Rotation um die Y-Achse. Diese Punkte sind entlang einer Linie in Y-Richtung mit X-Koordinate Null am Umfang angeordnet. Dennoch kann diese Bedingung näherungsweise auch erfüllt werden für Punkte, welche - in X-Richtung - benachbart sind zu dieser Linie. Sollen auch Punkte berücksichtigt werden, die weiter entfernt liegen von der Linie mit X-Koordinate Null, so kann eine Entzerrung der Kamerabilder derart durchgeführt werden, dass gleiche Abstände von Bildaufnahme zu Bildaufnahme über einen größeren Bereich der Kamerabilder bis hin zum gesamten Kamerabild erreicht werden. Bei einem rotationssymmetrischen Gegenstand G mit verschiedenen Durchmessern kann ebenfalls erreicht werden, dass der Abstand näherungsweise gleich ist, wenn diese Bedingung für einen mittleren Durchmesser erfüllt ist. Der Gegenstand G erscheint daher von einem Kamerabild zum nächsten genau bzw. näherungsweise um einen Pixelabstand Δx in der Bildebene verschoben.

In einer anderen bevorzugten Ausführungsform, ebenfalls für den Fall der Rotation, kann der Abstand als ein ganzzahliges oder auch nicht ganzzahliges Vielfaches des gegenstandsseitigen Pixelabstandes ΔX gewählt werden. Hier gilt entsprechendes wie im Fall der linearen Bewegung.

Ebenso ist es möglich, den Gegenstand G entlang einer beliebigen Kurve im Raum zu bewegen, beispielsweise mit Hilfe eines Roboters. Ebenso ist es bei sehr großen zu prüfenden Gegenständen G möglich, anstelle des Gegenstandes G die Kamera K und/oder die Beleuchtungselemente B1, B2 zu bewegen. Beispielsweise kann die Kamera K einschließlich der Beleuchtungselemente B1, B2 durch einen Roboter anhand einer weitgehend beliebigen Kurve im Raum bewegt werden. In diesen Fällen gestalten sich die Berechnungen zur Rückverschiebung von Einzelbildern und/oder zur Entzerrung mathematisch komplexer, sind aber genauso möglich.

Für die weitere Betrachtung und zugunsten einer überschaubaren zeichnerischen und mathematischen Darstellung wird wieder der Fall einer linearen Bewegung und einem Abstand aufeinanderfolgender Einzelbilder gewählt, der dem gegenstandsseitigen Pixelabstand ΔX entspricht. Dennoch gelten diese Überlegungen analog und entsprechend angepasst auch für die Rotation bis hin zu einer Bewegung entlang einer beliebigen Kurve im Raum und für andere Abstände in aufeinanderfolgenden Bildern.

In jedem Fall wird während der Bewegung eine Folge von Einzelbildern 13, nämlich eine durch die Beleuchtungsstärke

$$E_1(x_1, y, t)$$

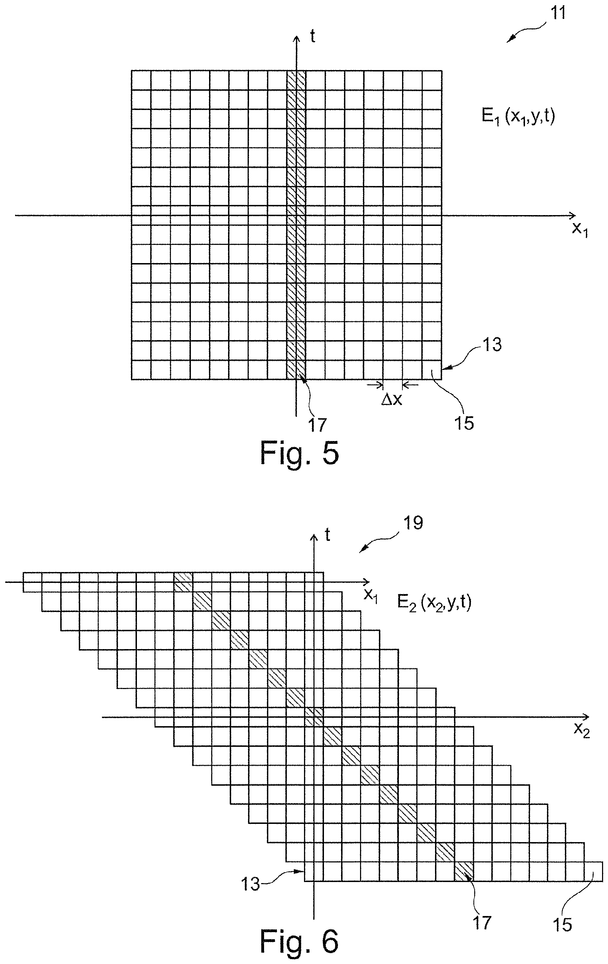

beschriebene Bildfolge 11 der Gegenstandsoberfläche 3 aufgenommen. Eine solche Bildfolge 11 ist schematisch dargestellt in Figur 5, wobei hier Pixel der Bildebene in Richtung der x-Achse dargestellt sind. Die einzelnen Pixel entsprechen dabei einzelnen Bildorten 15, deren Lage in der Bildebene durch eine erste Koordinate beziehungsweise einen ersten Pixelindex $x_1$ und eine zweite Koordinate beziehungsweise einen zweiten Pixelindex y beschrieben werden. Dabei ist in Figur 5 lediglich die erste Koordinate $x_1$ dargestellt. Zum Zwecke der weiteren Erläuterung wird die zweite Koordinate y festgehalten. Die Hochachse in Figur 5 entspricht einer Zeitachse, entlang derer die Einzelbilder abhängig von einem ihnen zugeordneten Zeitindex t aufeinanderfolgend in der Bildfolge angeordnet sind. Figur 5 zeigt die Bildfolge vor einer Rückverschiebung. Demnach ist hier gemäß den Abbildungseigenschaften der Kamera K jedem durch das Wertepaar ($x_1$, y) beschriebenen Bildort 15 ein in der Bildfolge unterscheidbarer Gegenstandsort auf der Gegenstandsoberfläche 3 zugeordnet.

Zur Vereinfachung der Darstellung wird hier zunächst nur die Beleuchtung der Gegenstandsoberfläche 3 durch ein Beleuchtungselement B1 betrachtet. $E_1$ ist die Beleuchtungsstärke in der Bildebene in Abhängigkeit des Pixelindex $x_1$ in Richtung der Rechtsachse, des Pixelindex y in Richtung der Tiefenachse und des Zeitindex t. Abhängig von der jeweiligen Relativposition von Beleuchtungselement B1, Gegenstand G und Kamera K streicht ein mehr oder weniger unregelmäßig geformtes Abbild 17 der Beleuchtungslinie in der Bildfolge Stück für Stück über die Gegenstandsoberfläche 3. Die Bildfolge enthält nun Informationen über die Form der Gegenstandsoberfläche 3 und deren optische Eigenschaften (optisch rau, optisch glatt oder glänzend, die Form und Breite der Streukeule 9 sowie den Reflexionsgrad und weitere mehr).

Die Auswertung der Bildfolge geschieht wie nachfolgend beschrieben. Mit Hilfe der Recheneinrichtung R werden die Einzelbilder 13 der Bildfolge 11 rechnerisch in ihrer Position entlang der Bewegungsrichtung verschoben. Die rechnerische Verschiebung der Bilder erfolgt entgegen der Richtung, in der sich der Gegenstand G in der Bildfolge 11 bewegt. Die rechnerische Verschiebung kompensiert also die reale Bewegung des Gegenstandes G. Beträgt die reale Verschiebung genau einen gegenstandsseitigen Pixelabstand ΔX, so sind die Einzelbilder 13 von Bild zu Bild um einen Abstand zurückzuschieben, der von Bild zu Bild immer genau um einen bildseitigen Pixelabstand Δx zunimmt. Die Rückverschiebung wächst dann linear mit dem Zeitindex t der Einzelbilder 13 der Bildfolge 11 an. Dadurch wird erreicht, dass an gleichen Bildorten 15 in den rückverschobenen Einzelbildern 13 immer derselbe Gegenstandsort 7 abgebildet ist. Gleiche Bildorte 15 in den rückverschobenen Bildern korrespondieren also mit gleichen Gegenstandsorten 7 auf der Gegenstandsoberfläche 3.

Eine derart rückverschobene Bildfolge 19 ist schematisch in Figur 6 dargestellt. Gleiche und funktionsgleiche Elemente sind mit gleichen Bezugszeichen versehen, sodass insofern auf die vorangegangene Beschreibung verwiesen wird. Dabei ist

$$E_2(x_2, y, t)$$

die Beleuchtungsstärke in der Bildebene in Abhängigkeit des Pixelindex $x_2$ in Richtung der gemäß der Rückverschiebung transformierter Rechtsachse, des Pixelindex y in Richtung der Tiefenachse und des Zeitindex t. Es wird angenommen, dass sich der Gegenstand G von Bildaufnahme zu Bildaufnahme um einen gegenstandsseitigen Pixelabstand ΔX in Richtung der positiven Rechtsachse beziehungsweise einen bildseitigen Pixelabstand Δx entgegen der positiven Rechtsachse bewegt. (Diese Annahme ist rein beispielhaft, die Bewegung kann auch in Richtung der negativen Rechtsachse erfolgen oder auch in Richtung der Tiefenachse Y oder in die entgegengesetzte Richtung. Ebenso ist eine Bewegung unter einem Winkel gegenüber der Rechtsachse bzw. der Tiefenachse Y möglich. Die Beschreibung anhand der Formeln gestaltet sich aber am übersichtlichsten, wenn genau die Richtung einer Koordinatenachse gewählt wird.) Der Zusammenhang des transformierten Pixelindex $x_2$ und des ursprünglichen Pixelindex $x_1$ für den gleichen korrespondierenden Gegenstandsort 7 ist dann

$$x_2 = x_1 - t.$$

Damit ergibt sich dann

$$E_2(x_2, y, t) = E_1(x_1, y, t) = E_1(x_2 + t, y, t).$$

Danach erfolgt die weitere Auswertung der rechnerisch so rückverschobenen Bildfolge 19 - auch als Bildstapel bezeichnet - entlang der durch den Zeitindex t vorgegebenen Stapelrichtung. Für eine vorgegebene Kombination der Pixelindizes $(x_2, y)$, welche immer demselben Gegenstandsort 7 entspricht, wird nun die rückverschobene Bildfolge 19 rechnerisch durchlaufen entlang des Zeitindex t. Ein Maximum der Beleuchtungsstärke $E_2(x_2, y, t)$ tritt dort auf, wo die Reflexionsbedingung exakt erfüllt ist (optisch glatte oder glänzende Oberfläche) oder wo die Beleuchtungsrichtung $\vec{s}$ übereinstimmt mit der Oberflächennormalen $\vec{n}$ (optisch raue Oberfläche, Prinzip des photometrischen Stereo). Daher wird für einen festgehaltenen rückverschobenen Bildort 15, der durch das Wertepaar $(x_2, y)$ beschrieben wird, derjenige Zeitindex $t_0 (x_2, y)$ bestimmt, für den $E_2(x_2, y, t)$ ein Maximum annimmt.

$$t_0\big(x_2, y\big) = \max{}_t\big(E_2\big(x_2, y, t\big)\big).$$

Mit Kenntnis des Zeitindex $t_0 (x_2, y)$ lässt sich der Pixelindex $x_{1,0}(x_2, y)$ des entsprechenden Bildorts 15 entlang der Rechtsachse $x_1$ in der ursprünglichen, nicht-rückverschobenen Bildfolge 11 errechnen, bei dem dieses Maximum aufgetreten ist

$$x_{1,0}\big(x_2, y\big) = x_2 + t_0\big(x_2, y\big).$$

Der Pixelindex $x_{1,0}(x_2, y)$ des nicht-rückverschobenen Bildorts 15 ist wiederum ein Maß dafür, wie groß die Oberflächenneigung der Gegenstandsoberfläche 3 in Richtung der Rechtsachse X ist. Bezeichnet der Pixelindex $x_{1,0}(x_2, y)$ beispielsweise eine Position in der Mitte des Bildes bezüglich der Rechtsachse $x_1$ und war die Beleuchtung mittig in Bezug auf die Rechtsachse X positioniert, so entspricht dies einem Gegenstandsort 7 mit Neigung Null bezüglich der Rechtsachse X. Bei einem ebenen Spiegel als Gegenstand G, der senkrecht zur Beobachtungsrichtung $\vec{b}$ steht, ergibt sich genau dieser Fall. Das Maximum des Abbildes 17 der Beleuchtungslinie ist mittig bezüglich der Rechtsachse $x_1$ positioniert. Die Figuren 5 und 6 zeigen das Beispiel der Beleuchtungsstärkeverteilung für einen solchen ebenen Spiegel. Das Maximum der Beleuchtungsstärke ist jeweils als markiertes Pixel eingezeichnet.

Bei der zuvor beschriebenen Ausführungsform des Verfahrens wird nach allem in der rückverschobenen Bildfolge 19 für einen festgehaltenen Gegenstandsort 7 ein Zeitindex $t_0$ ermittelt, bei dem eine Beleuchtungsstärke an dem rückverschobenen Bildort 15, der dem festgehaltenen Gegenstandsort 7 in der rückverschobenen Bildfolge 19 zugeordnet ist, maximal ist, wobei anschließend aus dem Zeitindex $t_0$ der entsprechende Bildort 15

in der nicht-rückverschobenen Bildfolge 11 ermittelt wird.

Alternativ ist es möglich, das Maximum oder die Maxima der Beleuchtungsstärke $E_1 (x_1, y, t)$ bezüglich $x_1$ zu berechnen.

$$x_{1,0}\big(x_2, y\big) = \max{}_{x1}\big(E_1\big(x_1, y, t\big)\big).$$

Vorteil ist hierbei, dass das Maximum bereits unmittelbar nach der jeweiligen Bildaufnahme mit dem Zeitindex t erfolgen kann. Bei dieser Ausführungsform des Verfahrens wird nun in jedem Einzelbild 13 der Bildfolge 11 wenigstens ein Bildort 15 maximaler Beleuchtungsstärke ermittelt, der einem korrespondierenden Gegenstandsort 7 zugeordnet wird. Bevorzugt werden in jedem Einzelbild 13 eine Vielzahl lokaler Maxima der Beleuchtungsstärke ermittelt, die jeweils einem korrespondierenden Gegenstandsort 7 zugeordnet werden. Eine solche Auswertung kann beispielsweise sehr schnell anhand einer speziellen Hardwareauswertung (beispielsweise auf einem FPGA) in der Kamera erfolgen. Dies führt zu einer ganz wesentlichen Datenreduktion, da nur noch die Position des Maximums für die weitere Verarbeitung weitergegeben werden muss, nicht aber das komplette Bild. Weiterhin ist vorteilhaft, dass solche speziellen Hardwareauswertungen bereits zur Verfügung stehen für Kameras, die für das Laserlichtschnittverfahren eingesetzt werden. Auch dort ist es die Aufgabe das Maximum einer Linie zu detektieren, wobei hier allerdings die Bildentstehung und auch die Interpretation der Bilder eine völlig andere ist.

Allgemein liegt bei einem Gegenstand G mit optisch glatter Oberfläche ein scharf begrenztes Maximum vor. Bei einer optisch rauen Oberfläche dagegen liegt eine Verteilung beispielsweise in Form einer breiten, Cosinus-förmigen Kurve vor. Das Maximum dieser Verteilung gibt ebenfalls Auskunft über die Neigung der Gegenstandsoberfläche 3 gemäß dem Verfahren des photometrischen Stereo (EP 1 567 827 A1). Glänzende Oberflächen weisen ein mehr oder weniger scharf ausgeprägtes Maximum auf, welches breiter ist als bei optisch glatten Oberflächen und schmaler als bei optisch rauen Oberflächen. Ebenso kann neben einem mehr oder weniger scharfen Maximum (entspricht der Streukeule 9 der Gegenstandsoberfläche 3) auch eine breite Verteilung über den gesamten Bildstapel verteilt auftreten. Anhand dieser Charakteristiken können lokal die optischen Eigenschaften des Gegenstandes G und die lokale Neigung der Gegenstandsoberfläche 3 bestimmt werden.

Die Form des Gegenstandes G zeigt sich in der genauen Form und Lage des Abbilds 17 der Beleuchtungslinie. Hierbei wird primär die Neigung der Gegenstandsoberfläche 3 senkrecht zur Linienrichtung erfasst. Die Neigung der Oberfläche parallel zur Linienrichtung wird primär nicht erfasst. Um beide Freiheitsgrade der Oberflächenneigung erfassen zu können, verwendet die Vorrichtung bevorzugt ein oder vorzugsweise auch mehrere weitere Beleuchtungselemente. Vorzugsweise ist ein zweites Beleuchtungselement B2 senkrecht zu dem ersten Beleuchtungselement B1 angeordnet. So können beide Freiheitsgrade der Oberflächenneigung erfasst werden.

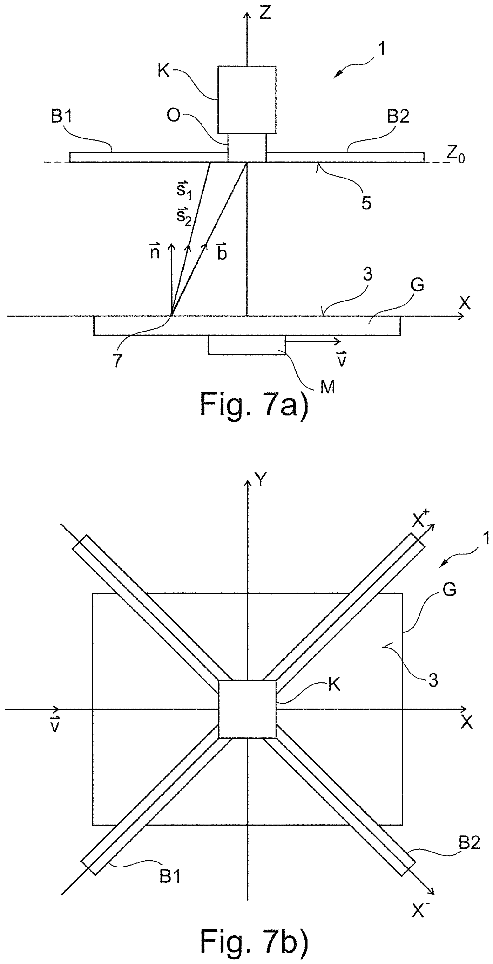

Die Beleuchtungselemente B1, B2 können wie folgt bezüglich der Bewegungsrichtung angeordnet sein. Ein Beleuchtungselement B1 kann beispielsweise senkrecht zur Bewegungsrichtung angeordnet sein, das andere parallel zur Bewegungsrichtung (Plus-Anordnung). Das Abbild des Beleuchtungselements B1, welches senkrecht zur Bewegungsrichtung steht, überstreicht nun den Gegenstand G im Lauf der Bewegung. Bei dem Beleuchtungselement B2 parallel zur Bewegungsrichtung ist dies nicht der Fall. Eine Linie, die entlang ihrer Linienrichtung verschoben wird, ist mit sich selbst deckungsgleich (sofern die Linie sehr lang ausgedehnt ist). Man erhält daher immer dasselbe Abbild der Linie während der Bewegung. Stattdessen werden die beiden Beleuchtungselemente B1, B2 bei dem in Figur 7 dargestellten Ausführungsbeispiel der Vorrichtung 1 um +45° bzw. - 45° bezüglich der Bewegungsrichtung, mithin kreuzförmig oder nach Art eines X, angeordnet. Andere Winkel sind möglich, beispielsweise +30° und -30°, +60° und -60° oder auch asymmetrische Winkel. Für beide Beleuchtungselemente B1, B2 überstreicht so das Bild der jeweiligen Linie die Gegenstandsoberfläche 3. Die daraus gewonnene lokale Neigung derselben in Richtung von +45° ($X^+$-Richtung) bzw. von -45° ($X^-$-Richtung) bezüglich der Bewegungsrichtung kann durch eine Koordinatentransformation in Neigungswerte in Richtung der Bewegung bzw. senkrecht zur Bewegung überführt werden.

Allerdings ist es nun so, dass jeweils die Abbilder von mindestens zwei Beleuchtungslinien der Beleuchtungselemente B1, B2 in der Bildfolge 11 enthalten sind. Um beide Neigungsrichtungen voneinander unterscheiden zu können ist es notwendig, die beiden Abbilder der Beleuchtungslinien voneinander unterscheiden zu können. Dies kann beispielsweise anhand der Farbe der Beleuchtungen (Farbmultiplex, beispielsweise Rot, Grün, Blau...) und einer Farbkamera erfolgen. Nachteilig ist dabei, dass die Farbtrennung abhängig von der Farbe der Gegenstandsoberfläche 3 ist. Bei einem roten Gegenstand G beispielsweise wird eine blaue Beleuchtung nicht oder nur schwach reflektiert. Auch können die optischen Eigenschaften (optisch rau, optisch glatt, glänzend) in Abhängigkeit von der Wellenlänge der Beleuchtung und damit zu deren Farbe variieren.

Bevorzugt wird daher ein Verfahren, bei dem eine Trennung der Beleuchtungen durch Zeitmultiplex durchgeführt wird. Hierbei werden die mindestens zwei Beleuchtungselemente B1, B2 zu verschiedenen Zeiten aktiviert. Im Lauf der Bewegung wird dabei zunächst das erste Beleuchtungselement B1 aktiviert und ein Einzelbild aufgenommen. Danach wird das zweite Beleuchtungselement B2 aktiviert und ein weiteres Einzelbild aufgenommen, falls vorhanden das dritte Beleuchtungselement und so weiter, danach wieder das erste Beleuchtungselement B1 und so weiter. Der Abstand, den der Gegenstand G zwischen zwei aufeinanderfolgenden Beleuchtungen überstreicht, entspricht in einer bevorzugten Ausführungsform dem gegenstandsseitigen Pixelabstand $\Delta X$ dividiert durch die Anzahl der Beleuchtungen. Somit ist der Abstand zwischen einer ersten Beleuchtung und einer unmittelbar nachfolgenden Beleuchtung genau ein Pixelabstand.

Der Begriff des gegenstandsseitigen Pixelabstands $\Delta X$ spricht den gemäß der Abbildungseigenschaften der Kamera K auf die Gegenstandsoberfläche 3 projizierten Pixelabstand $\Delta x$ an. Auf diese Weise wird ein Gegenstandsort, der in einem ersten Einzelbild auf einen ersten Pixel abgebildet wurde, in dem unmittelbar nachfolgenden zweiten Einzelbild auf einen dem ersten Pixel unmittelbar benachbarten zweiten Pixel abgebildet.

In einer anderen bevorzugten Ausführungsform kann der Abstand als ein ganzzahliges oder auch nicht ganzzahliges Vielfaches des gegenstandsseitigen Pixelabstandes $\Delta X$ gewählt werden. Bevorzugt wird eine Ausführungsform, bei welcher der Abstand der scheinbaren Breite der Beleuchtungslinie dividiert durch die Anzahl der Beleuchtungen entspricht, näherungsweise entspricht oder in dieser Größenordnung liegt.

Werden mehr als zwei Beleuchtungselemente verwendet, so können diese in derselben Ebene - vorzugsweise in einer Ebene mit $Z=Z_0$ - wie die beiden ersten Beleuchtungselemente B1, B2 angeordnet sein, wobei sie vorzugsweise unter einem Winkel bezüglich der X-bzw. der Y-Achse angeordnet sind, welcher vom Winkel der beiden ersten Beleuchtungselemente B1, B2 abweicht. In diesem Fall können die beiden Freiheitsgrade der Neigung in X- und in Y-Richtung dann redundant bestimmt werden, was die Zuverlässigkeit der Messung erhöht.

Alternativ können mehr als zwei Beleuchtungselemente eingesetzt werden, um größere Neigungen der Gegenstandsoberfläche 3 bezüglich der X-Achse bzw. der Y-Achse bestimmen zu können. Vorzugsweise sind dann weitere Beleuchtungselemente in parallelem Abstand zu den ersten Beleuchtungselementen B1, B2 angeordnet. Alternativ können mehr als zwei Beleuchtungselemente eingesetzt werden, wobei sich das erste und das zweite Beleuchtungselement B1, B2 in einer ersten Ebene befinden - vorzugsweise in einer Ebene mit $Z = Z_o$ - und sich weitere Beleuchtungselemente in weiteren, von der ersten Ebene verschiedenen Ebenen befinden. Vorzugsweise befinden sich ein drittes und ein viertes Beleuchtungselement in einer von der der ersten Ebene verschiedenen Ebene mit $Z = Z_1$. Weitere Beleuchtungselemente in weiteren Ebenen sind möglich. Das dritte beziehungsweise vierte Beleuchtungselement kann parallel zu dem ersten beziehungsweise zweiten Beleuchtungselement B1, B2 angeordnet sein. Alternativ können das dritte und vierte Beleuchtungselement aber auch unter anderen Winkeln angeordnet sein als das erste und zweite Beleuchtungselement B1, B2, damit die Sicht ausgehend von dem Gegenstand G auf alle Beleuchtungselemente möglichst frei und ohne gegenseitige Verdeckung möglich ist.

Bevorzugt werden mehr als zwei linienförmige Beleuchtungselemente in mehreren Ebenen eingesetzt, um das sogenannte Höhenproblem zu lösen. Das Höhenproblem besteht darin, dass in der Deflektometrie mit einer Kamera K und Beleuchtungselementen B1, B2 in einer Ebene nicht unterscheidbar ist, ob ein Flächenelement der Gegenstandsoberfläche 3 stark geneigt ist und sich dabei näher an der Kamera K befindet oder ob es schwächer geneigt ist und weiter von der Kamera K entfernt ist. Neben der Unbekannten der Neigung - in zwei Koordinatenrichtungen - ist also auch die Koordinate in Z-Richtung eine Unbekannte. Dieses Problem kann gelöst werden durch Vorwissen, beispielsweise wenn sich ein mehr oder weniger flacher Gegenstand G in einer bekannten Ebene bezüglich Z (vorzugsweise bei Z = 0) befindet. Besteht solches Vorwissen nicht, sind zur Lösung eines Problems mit den beiden Unbekannten Neigung - unterteilt in die Neigung bezüglich X- und Y-Richtung - und Höhe auch zwei voneinander unabhängige Gegebene notwendig. Zwei unabhängige Gegebene bezüglich der Beleuchtung liegen insbesondere dann vor, wenn das dritte und vierte Beleuchtungselement in einer Ebene angeordnet sind, welche abweicht von der Ebene, in der sich das erste und das zweite Beleuchtungselement B1, B2 befinden.

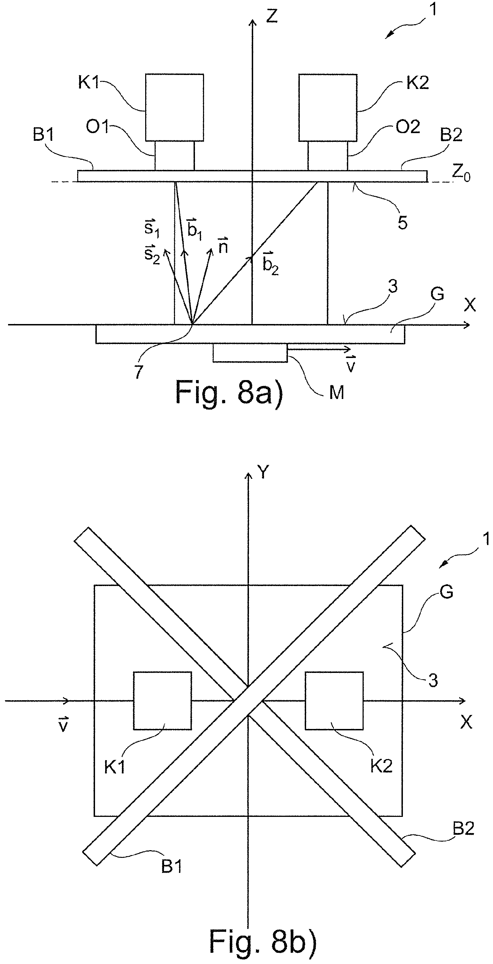

Das Höhenproblem kann alternativ oder auch zusätzlich wie folgt gelöst werden. Bisher wurde von einer Anordnung mit nur einer Kamera K ausgegangen. Alternativ ist es möglich zwei oder mehr Kameras K1, K2 einzusetzen. Entsprechend weist das Ausführungsbeispiel der Vorrichtung 1 gemäß Figur 8 zwei außermittig, also außerhalb eines Kreuzungspunktes der Beleuchtungselemente B1, B2 angeordnete Kameras K1, K2 auf. Gleiche und funktionsgleiche Elemente sind mit gleichen Bezugszeichen versehen, sodass insofern auf die vorangegangene Beschreibung verwiesen wird. In diesem Fall liegen mehr als zwei Gegebene bezüglich der Kameras K1, K2 vor. Zwei oder auch mehr Kameras K1, K2 sind auf den Gegenstand G ausgerichtet.

Bei einer bevorzugten Ausführungsform schließen deren optischen Achsen einen Winkel ein. Vorzugsweise sind die optischen Achsen zumindest näherungsweise auf einen gemeinsamen Punkt oder Bereich ausgerichtet, vorzugsweise sind dies im hier verwendeten Koordinatensystem der Koordinatenursprung und gleichzeitig ein Symmetriepunkt der Anordnung. Die Verwendung von mehreren Kameras K1, K2 bietet weitere Vorteile. Wenn mit einer ersten Kamera K1 ein erster Winkelbereich von Neigungen in X- und Y- Richtung erfasst werden kann, ist es mit weiteren Kameras K2 möglich, andere Winkelbereiche abzudecken. Werden beispielsweise zwei Kameras K1, K2 so angeordnet, dass eine erste Kamera K1 im Bereich von negativen X-Koordinaten angeordnet ist und eine zweite im Bereich von positiven X-Koordinaten, so kann die erste Kamera K1 bevorzugt Neigungen mit positivem Winkel bezüglich der X-Achse erfassen, während die zweite Kamera K2 bevorzugt Neigungen mit negativem Winkel bezüglich der X-Achse erfassen kann. Vorzugsweise sind die Kameras K1, K2 so angeordnet, dass sie dennoch beide einen bestimmten Winkelbereich (Schnittmenge an Neigungen) gemeinsam abdecken können. Man könnte argumentieren, dass bei Kameras K1, K2, deren optische Achsen gegenüber der Z-Achse geneigt sind, ein deckungsgleiches Rückverschieben von Bildern aufgrund der perspektivischen Verzerrung nicht mehr möglich ist. In diesem Fall kann ein sogenannter Rektifizierungsschritt der Einzelbilder vorgeschaltet werden, welcher die perspektivische Verzerrung korrigiert. Werden mehr als zwei Kameras K1, K2 verwendet, so werden diese bevorzugt so angeordnet, dass eine dritte Kamera sich im Bereich der negativen Y-Koordinaten und eine vierte im Bereich der positiven Y-Koordinaten befindet, wobei sie auf den Bereich um den Koordinatenursprung ausgerichtet sind. Die dritte Kamera kann dann bevorzugt Neigungen mit positivem Winkel bezüglich der Y-Achse erfassen, während die vierte Kamera bevorzugt Neigungen mit negativem Winkel bezüglich der Y-Achse erfassen kann. Vorzugsweise sind alle vier Kameras so angeordnet, dass sie dennoch alle einen bestimmten Winkelbereich (Schnittmenge an Neigungen) gemeinsam abdecken können. Vorzugsweise sind alle Kameras symmetrisch bezüglich der Z-Achse angeordnet. Vorzugsweise sind auch die Beleuchtungselemente symmetrisch bezüglich der Z-Achse angeordnet. Besonders vorteilhaft ist es, wenn die Kameras in den Zwischenräumen zwischen den Beleuchtungselementen angeordnet sind. Damit ist die Sicht gesehen von einem Flächenelement sowohl in Richtung der Kameras als auch der Beleuchtungselemente nicht verdeckt. Auch eine größere Anzahl von Kameras ist möglich.

Alternativ können die optischen Achsen der Kameras auch parallel ausgerichtet sein, vorzugsweise in Richtung der negativen Z-Achse. Vorzugsweise sind die Kameras symmetrisch bezüglich der Z-Achse angeordnet. Vorzugsweise sind die Beleuchtungselementen ebenfalls symmetrisch bezüglich der Z-Achse angeordnet.

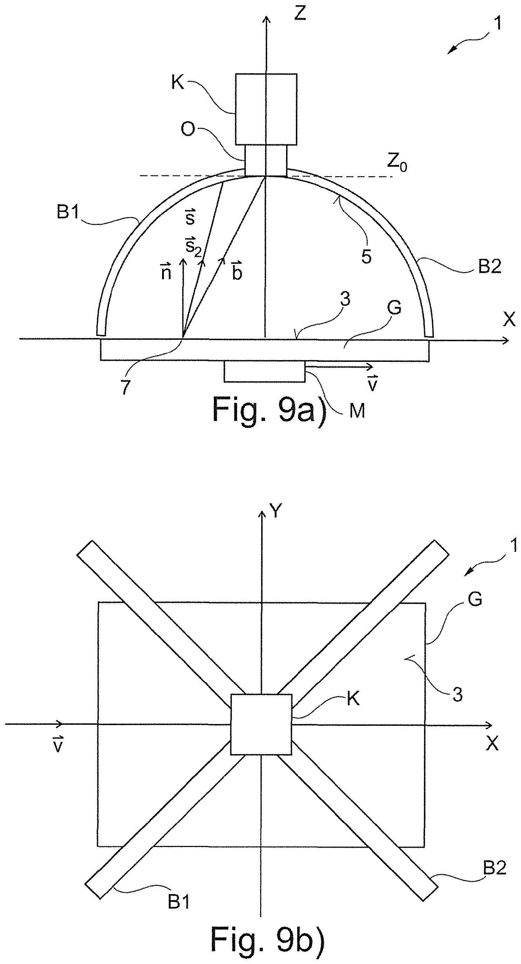

Bei den obigen Überlegungen wurde zunächst davon ausgegangen, dass die linienförmigen Beleuchtungselemente B1, B2 jeweils entlang einer Gerade im Raum verlaufen. Alternativ ist es bevorzugt möglich, die linienförmigen Beleuchtungselemente B1, B2 gebogen, also mit einer gekrümmten Form auszuführen. Dies ist bei dem in Figur 9 dargestellten Ausführungsbeispiel der Vorrichtung 1 der Fall. Gleiche und funktionsgleiche Elemente sind mit gleichen Bezugszeichen versehen, sodass insofern auf die vorangegangene Beschreibung verwiesen wird. So lässt sich auch mit einer begrenzten Länge der Beleuchtungselemente B1, B2 ein großer Winkelbereich abdecken. Die ersten zwei Beleuchtungselemente B1, B2 können beispielsweise in der Draufsicht gemäß Figur 9b - in negativer Z-Richtung gesehen - in Form eines X angeordnet sein mit Ausrichtung entlang der X$^+$- beziehungsweise der X$^-$-Richtung. In der Seitenansicht gemäß Figur 9a können die Beleuchtungselemente B1, B2 gebogen ausgeführt sein, bevorzugt in Form eines Kreises, eines Teilkreises und bevorzugt eines Halbkreises mit Mittelpunkt um den Koordinatenursprung. Auch die Wahl eines Teilkreises mit mehr als 180° kann vorteilhaft sein, um einen größeren Winkelbereich an Neigungen abdecken zu können.

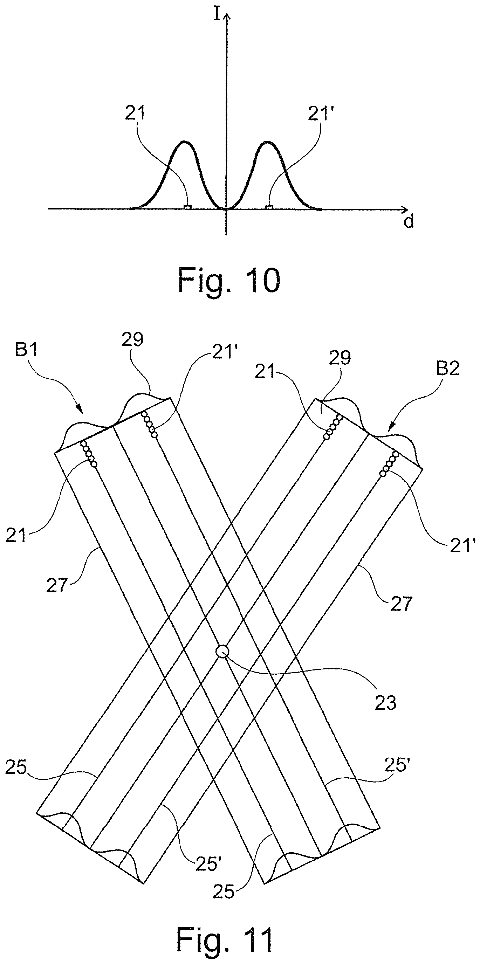

Figur 10 zeigt eine schematische Darstellung eines Leuchtdichteprofils I für ein Beleuchtungselement aufgetragen gegen dessen Breite b. Dabei zeigt sich, dass das Beleuchtungselement hier wenigstens zwei in zueinander parallel versetzten, sich in Längsrichtung des Beleuchtungselements erstreckenden Reihen angeordnete Beleuchtungsteilelemente 21, 21' aufweist. Es ist möglich, dass die Beleuchtungsteilelemente 21, 21' als sich - in Längsrichtung des Beleuchtungselements gesehen - erstreckende Fasern oder Faserbündel ausgebildet sind. Alternativ ist es möglich, dass die Beleuchtungsteilelemente 21, 21' nebeneinander angeordnete Punktquellen aufweisen, vorzugsweise jeweils eine Mehrzahl von Leuchtdioden. Die Beleuchtungsteilelemente 21, 21' emittieren vorzugsweise eine weiche Beleuchtungsverteilung, hier konkret eine im Wesentlichen gaußförmige, vorzugsweise gaußförmige Beleuchtungsverteilung I. Dabei ergibt sich für das Beleuchtungselement insgesamt aufgrund der beiden Beleuchtungsteilelemente 21, 21' eine Doppel-Maximum-Verteilung, insbesondere eine Doppel-Gauß-Verteilung.

Figur 11 zeigt eine schematische Darstellung eines Ausführungsbeispiels einer Anordnung zweier Beleuchtungselemente B1, B2. Diese sind hier X-förmig zueinander angeordnet und kreuzen sich im Bereich eines gemeinsamen Mittelpunkts, in welchem eine Blende 23 für die Kamera K vorgesehen ist. Um zu vermeiden, dass eine Beleuchtungslinie durch die Blende 23 unterbrochen wird, weisen die Beleuchtungselemente B1, B2 hier jeweils zu dem Mittelpunkt symmetrisch versetzte Beleuchtungslinien 25, 25' auf, entlang derer bei dem hier dargestellten Ausführungsbeispiel eine Mehrzahl einander benachbarter Beleuchtungsteilelemente 21, 21' angeordnet sind. Dabei sind hier der einfacheren Darstellung wegen nur einige Beleuchtungsteilelemente 21, 21' dargestellt. Insgesamt erstrecken sich jedoch die Beleuchtungsteilelemente 21, 21' bevorzugt entlang der gesamten Länge der Beleuchtungslinien 25, 25'.

Es ist möglich, dass ein Beleuchtungselement B1, B2 mehr als zwei Beleuchtungslinien 25, 25' aufweist. Insbesondere ist ein Beleuchtungselement B1, B2 möglich, welches sechs Beleuchtungslinien 25, 25' aufweist.

Die Beleuchtungsteilelemente 21, 21' sind vorzugsweise auf einer Trägerplatte 27 oder einem Trägerkörper befestigt, wobei vorzugsweise zur Verwirklichung einer vorherbestimmten Leuchtdichteverteilung - insbesondere der Leuchtdichteverteilung I gemäß Figur 10 - ein Streuelement 29, insbesondere ein Streukörper vorgesehen ist, der auf der Trägerplatte 27 oder dem Trägerkörper befestigt ist. Die Leuchtdichteverteilung I folgt dabei bevorzugt im Wesentlichen der Form des Streuelements 29, wobei sie jedenfalls durch dessen Form bestimmt wird. Es ist möglich, dass das Streuelement 29 eine symmetrische, insbesondere für alle Beleuchtungslinien 25, 25' identische Form aufweist. Alternativ ist es auch möglich, dass die Form des Streuelements 29 und damit die hieraus resultierende Leuchtdichteverteilung entlang der Breite b der Beleuchtungselemente B1, B2 und insbesondere von Beleuchtungslinie 25, 25' zu Beleuchtungslinie 25, 25' variiert. Auf diese Weise können sehr flexibel verschiedene Leuchtdichteverteilungen I realisiert werden.

Alternativ zu dem in Figur 11 dargestellten Ausführungsbeispiel ist es auch möglich, dass die beiden Beleuchtungselemente B1, B2 keinen gemeinsamen Mittelpunkt, sondern beispielsweise einen gemeinsamen Endpunkt teilen, wobei sie A- oder V-förmig angeordnet sind. Es ist auch möglich, dass die beiden Beleuchtungselemente B1, B2 separat voneinander angeordnet sind, sodass sie keinen gemeinsamen Punkt teilen. Allgemein kann ein Kreuzungspunkt zwischen den beiden Beleuchtungselementen B1, B2 außermittig, an einem Rand der Beleuchtungselemente B1, B2, jedenfalls aber bevorzugt nicht im Bereich der Beleuchtungslinien 25, 25' gewählt werden.

Es ist auch möglich, dass die Kamera K nicht im Bereich des gemeinsamen Mittelpunktes der Beleuchtungselemente B1, B2 positioniert wird, sondern außermittig, beispielsweise neben den Beleuchtungselementen B1, B2.

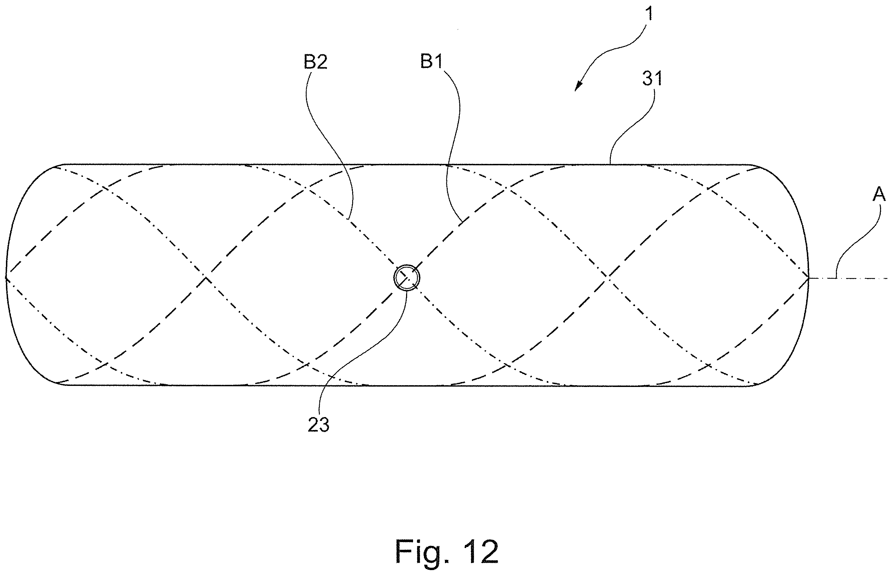

Figur 12 zeigt eine schematische Darstellung eines fünften Ausführungsbeispiels der Vorrichtung 1. Dabei ist hier das erste Beleuchtungselement B1 durch eine gestrichelte Linie dargestellt. Das zweite Beleuchtungselement B2 ist durch eine strich-punktierte Linie dargestellt. Die beiden Beleuchtungselemente B1, B2 verlaufen entlang von zueinander je sowohl in Umfangsrichtung als auch in Längsrichtung gesehen versetzten Schraubenlinien auf einem zylindersymmetrischen Trägerkörper 31. Dieser bildet hier einen Tunnel mit einer Längs- oder Symmetrieachse A, entlang der ein zu prüfender und/oder zu erfassender Gegenstand durch den Trägerkörper 31 hindurchbewegt werden kann. Dabei wird der Gegenstand durch die Beleuchtungselemente B1, B2 beleuchtet. Es ist eine Blende 23 vorgesehen, durch welche der Gegenstand mithilfe der Kamera K beobachtet werden kann. Dabei können Bereiche des Gegenstands sowohl in Reflexion als auch in Transmission vermessen werden, weil sich die Beleuchtungselemente B1, B2 um 360° um den Gegenstand herumwinden. Dieser wird also durch die Beleuchtungselemente B1, B2 von allen Seiten beleuchtet. Es ist möglich, dass zusätzlich zu der Blende 23 weitere Blenden vorgesehen sind, um den Gegenstand aus verschiedenen Richtungen beobachten zu können. Es ist möglich, dass mehr als zwei Beleuchtungselemente B1, B2 vorgesehen sind, was in Figur 12 auch angedeutet ist. Die hier dargestellte Vorrichtung 1 ist beliebig skalierbar und so für sehr kleine bis sehr große Prüfgegenstände, beispielsweise für vollständige Kraftfahrzeuge, verwendbar.

**Patentansprüche**

1. Verfahren zur optischen Formerfassung und/oder Prüfung eines Gegenstandes (G), mit folgenden Schritten:

   - Anordnen von mindestens einer Kamera (K), mindestens einem linienförmigen Beleuchtungselement (B1,B2) und einem Gegenstand (G) derart relativ zueinander, dass eine Gegenstandsoberfläche (3) von dem wenigstens einen Beleuchtungselement beleuchtbar und von der Kamera (K) aufnehmbar ist;
   - Bewirken einer Relativbewegung zumindest zwischen zwei Elementen ausgewählt aus einer Gruppe bestehend aus dem Gegenstand (G), dem wenigstens einen Beleuchtungselement (B1,B2) und der Kamera (K), wobei eine Bewegungsrichtung mit dem wenigstens einen Beleuchtungselement (B1,B2) einen Winkel einschließt, der von 0° verschieden ist;
   - Aufnehmen einer Bildfolge (11) der Gegenstandsoberfläche (3) mit der Kamera (K) während der Relativbewegung, wobei die Gegenstandsoberfläche (3) in einer Bildebene der Kamera (K) abgebildet wird;
   - Beleuchten der Gegenstandsoberfläche (3) während der Belichtung der Bildebene mit dem wenigstens einen Beleuchtungselement (B1,B2),

   **gekennzeichnet durch**

   - Auswerten der aufgenommenen Bildfolge (11) in Hinblick auf lokale Oberflächenneigungen in zwei orthogonal zueinander orientierten Richtungen, wobei
   - wenigstens zwei linienförmige Beleuchtungselemente verwendet werden, wobei
   - die Beleuchtungselemente (B1,B2) einen Winkel miteinander einschließen, der von 0° verschieden ist, wobei
   - die Bewegungsrichtung mit zwei Beleuchtungselementen (B1,B2) der wenigstens zwei Beleuchtungselemente (B1,B2) einen Winkel einschließt, der von 0° verschieden ist, wobei
   - die Gegenstandsoberfläche (3) während der Belichtung der Bildebene mit wenigstens einem der Beleuchtungselemente (B1,B2) beleuchtet wird, wobei
   - zur Unterscheidung der Abbilder der Beleuchtungselemente (B1,B2) voneinander

   a. ein Zeitmultiplex-Verfahren durchgeführt wird, oder
   b. ein Farbmultiplex-Verfahren durchgeführt wird, oder
   c. die Beleuchtungselemente (B1,B2) derart angeordnet sind, dass der Punkt, an welchem sich die Beleuchtungselemente kreuzen, außermittig, am Rand von wenigstens einem der Beleuchtungselemente und/oder nicht im Bereich einer Beleuchtungslinie eines Beleuchtungselements liegt, oder wobei die Beleuchtungselemente (B1,B2) zueinander versetzt angeordnet sind,

   damit lokale Oberflächenneigungen in zwei orthogonal zueinander orientierten Richtungen berechnet werden.

2. Verfahren nach Anspruch 1, **gekennzeichnet durch** folgende Schritte:

   - Auswerten der aufgenommenen Bildfolge (11) in Hinblick auf lokale optische Eigenschaften der Gegenstandsoberfläche (3), und/oder
   - Zuordnen korrespondierender Bildorte (15) maximaler Beleuchtungsstärke in der Bildebene zu in der Bildfolge (11) unterscheidbaren Gegenstandsorten (7) auf der Gegenstandsoberfläche (3), und
   - Berechnen lokaler Oberflächenneigungen an den Gegenstandsorten (7) aus der Position des jeweils korrespondierenden Bildortes (15) in der Bildebene.

3. Verfahren nach einem der vorhergehenden Ansprüche, **dadurch gekennzeichnet, dass**

   - in jedem Einzelbild (13) der Bildfolge (11) wenigstens ein Bildort (15) maximaler Beleuchtungsstärke ermittelt wird, der einem korrespondierenden Gegenstandsort (7) zugeordnet wird, oder dass
   - die Einzelbilder (13) der Bildfolge (11) proportional zu einem den Einzelbildern (13) jeweils zugeordneten Zeitindex (t) in der Bildebene rückverschoben werden, sodass jedem rückverschobenen Bildort (15) in der rückverschobenen Bildfolge (19) genau ein Gegenstandsort (7) zugeordnet wird, wobei vorzugsweise
   - in der rückverschobenen Bildfolge (19) für einen festgehaltenen Gegenstandsort (7) ein Zeitindex ($t_o$) ermittelt wird, bei dem eine Beleuchtungsstärke an dem rückverschobenen Bildort (15), der dem Gegenstandsort (7) in der rückverschobenen Bildfolge (19) zugeordnet ist, maximal ist, wobei aus dem Zeitindex ($t_o$) der ent-

sprechende Bildort (15) in der nicht-rückverschobenen Bildfolge (11) ermittelt wird, wobei aus der Position des Bildortes (15) die lokale Oberflächenneigung an dem Gegenstandsort (7) berechnet wird.

4. Verfahren nach einem der vorhergehenden Ansprüche, **dadurch gekennzeichnet, dass** aus einer Beleuchtungsstärken-Verteilung in der Bildebene - vorzugsweise um einen Bildort (15) maximaler Beleuchtungsstärke - eine lokale optische Eigenschaft des korrespondierenden Gegenstandsorts (7) ermittelt wird.

5. Verfahren nach einem der vorhergehenden Ansprüche, **dadurch gekennzeichnet, dass** aus einer Höhe einer Beleuchtungsstärke - vorzugsweise an einem Bildort (15) maximaler Beleuchtungsstärke - in der Bildebene eine lokale optische Eigenschaft des korrespondierenden Gegenstandsorts (7) ermittelt wird.

6. Vorrichtung zur optischen Formerfassung und/oder Prüfung eines Gegenstandes (G) zur Durchführung eines Verfahrens nach einem der Ansprüche 1 bis 5, mit

    - mindestens einer Kamera (K) und mindestens einem linienförmigen Beleuchtungselement (B1,B2), wobei die Kamera (K) und das mindestens eine Beleuchtungselement (B1,B2) derart relativ zueinander angeordnet sind, dass eine Gegenstandsoberfläche (3) durch das Beleuchtungselement (B1,B2) beleuchtbar und durch die Kamera (K) aufnehmbar ist, wobei
    - mit der Kamera (K) eine Bildfolge (11) der Gegenstandsoberfläche (3) während einer Relativbewegung von zumindest zwei Elementen relativ zueinander ausgewählt aus einer Gruppe bestehend aus der Gegenstandsoberfläche (3), dem mindestens einen Beleuchtungselement (B1,B2) und der Kamera (K) aufnehmbar ist, so dass die Gegenstandsoberfläche (3) in einer Bildebene der Kamera (K) abgebildet wird, wobei
    - das mindestens eine Beleuchtungselement (B1,B2) derart ansteuerbar ist, dass die Gegenstandsoberfläche (3) während der Belichtung der Bildebene durch das mindestens eine Beleuchtungselement (B1,B2) beleuchtet wird,

    **gekennzeichnet durch**

    - eine Recheneinrichtung (R), die ausgebildet ist zur Auswertung der aufgenommenen Bildfolge (11) in Hinblick auf lokale Oberflächenneigungen in zwei orthogonal zueinander orientierten Richtungen, und
    - wenigstens zwei linienförmige Beleuchtungselemente (B1,B2), wobei

    - die Beleuchtungselemente (B1,B2) derart angeordnet sind, dass sie einen Winkel miteinander einschließen, der von 0° verschieden ist, wobei
    - eine Bewegungsrichtung der Relativbewegung mit zwei Beleuchtungselementen (B1,B2) der wenigstens zwei Beleuchtungselemente (B1,B2) einen Winkel einschließt, der von 0° verschieden ist, wobei
    - die Beleuchtungselemente (B1,B2) derart ansteuerbar sind, dass die Gegenstandsoberfläche (3) während der Belichtung der Bildebene zumindest **durch** eines der wenigstens zwei Beleuchtungselemente (B1,B2) beleuchtet wird, wobei
    - zur Unterscheidung der Abbilder der Beleuchtungselemente (B1,B2) voneinander

        a. die Beleuchtungselemente voneinander verschiedene spektrale Verteilungen abstrahlen, und/oder
        b. zeitlich unabhängig voneinander ansteuerbar sind, oder
        c. die Beleuchtungselemente (B1,B2) derart angeordnet sind, dass der Punkt, an welchem sich die Beleuchtungselemente kreuzen, außermittig, am Rand von wenigsten einem der Beleuchtungselemente und/oder nicht im Bereich einer Beleuchtungslinie eines Beleuchtungselements liegt, oder wobei die Beleuchtungselemente (B1,B2) zueinander versetzt angeordnet sind,

    damit lokale Oberflächenneigungen in zwei orthogonal zueinander orientierten Richtungen berechnet werden.

7. Vorrichtung nach Anspruch 6, **dadurch gekennzeichnet, dass**

    - die Recheneinrichtung (R) ausgebildet ist zur Auswertung der aufgenommenen Bildfolge (11) in Hinblick auf lokale optische Eigenschaften der Gegenstandsoberfläche (3), und/oder
    - die Recheneinrichtung eingerichtet ist zur Zuordnung korrespondierender Bildorte (15) maximaler Beleuchtungsstärke in der Bildebene zu in der Bildfolge (11) unterscheidbaren Gegenstandsorten (7) auf der Gegenstandsoberfläche (3), und zum Berechnen von lokalen Oberflächenneigungen an den Gegenstandsorten (7) aus der Position des jeweils korrespondierenden Bildortes (15) in der Bildebene.

8. Vorrichtung nach einem der Ansprüche 6 bis 7, **gekennzeichnet durch** eine Bewegungseinrichtung (M), mit der die Relativbewegung entlang einer Bewegungsrichtung zumindest zwischen zwei Elementen ausgewählt aus einer Gruppe bestehend aus einem Gegenstand (G), der die Gegenstandsoberfläche (3) aufweist, dem wenigstens einen Beleuchtungselement (B1,B2) und der Kamera (K) bewirkbar ist, wobei die Bewegungseinrichtung derart ausgebildet und relativ zu den wenigstens zwei Beleuchtungselementen (B1,B2) angeordnet ist, dass die Bewegungsrichtung mit zwei Beleuchtungselementen (B1,B2) der wenigstens zwei Beleuchtungselemente (B1,B2), einen Winkel einschließt, der von 0° verschieden ist.

9. Vorrichtung nach einem der Ansprüche 6 bis 8, **dadurch gekennzeichnet, dass**

   - das wenigstens eine Beleuchtungselement (B1,B2) eine diffuse, ungerichtete Abstrahlcharakteristik aufweist, wobei die Abstrahlcharakteristik vorzugsweise eine lambertsche Abstrahlcharakteristik oder eine gleichverteilte Abstrahlcharakteristik ist, und/oder dass
   - die Beleuchtungselemente (B1,B2) einen Winkel miteinander einschließen, der von mindestens 1° bis höchstens 179°, vorzugsweise 60°, vorzugsweise 90°, vorzugsweise 120° beträgt.

10. Vorrichtung nach einem der Ansprüche 6 bis 9, **dadurch gekennzeichnet, dass** die Bewegungsrichtung den Winkel zwischen den Beleuchtungselementen (B1,B2) teilt, wobei sie vorzugsweise eine Winkelhalbierende bezüglich des Winkels zwischen den Beleuchtungselementen (B1,B2) bildet.

11. Vorrichtung nach einem der Ansprüche 6 bis 10, **dadurch gekennzeichnet, dass** die Beleuchtungselemente (B1,B2) voneinander verschiedene spektrale Verteilungen abstrahlen und/oder dass die Beleuchtungselemente (B1,B2) zeitlich unabhängig voneinander ansteuerbar sind.

12. Vorrichtung nach einem der Ansprüche 6 bis 11, **dadurch gekennzeichnet, dass** mehr als zwei linienförmige Beleuchtungselemente (B1,B2) vorgesehen sind, wobei die Beleuchtungselemente (B1,B2) bevorzugt verschiedene Winkel mit der Bewegungsrichtung einschließen, derart verschieden voneinander angeordnet sind, dass sie verschiedene Abstände zu der Gegenstandsoberfläche (3) aufweisen, und/oder relativ zueinander - vorzugsweise in derselben Ebene - verschoben sind.

13. Vorrichtung nach einem der Ansprüche 6 bis 12, **dadurch gekennzeichnet, dass** mindestens zwei Kameras (K1,K2) vorgesehen sind, die versetzt zueinander angeordnet sind, und/oder dass mindestens drei Beleuchtungselemente (B1,B2) derart angeordnet sind, dass ein erstes und ein zweites Beleuchtungselement (B1,B2) gemeinsam in einem ersten Abstand zu der Gegenstandsoberfläche (3) angeordnet sind, wobei ein drittes Beleuchtungselement in einem zweiten Abstand zu der Gegenstandsoberfläche (3) angeordnet ist, wobei der erste Abstand von dem zweiten Abstand verschieden ist, wobei die Recheneinrichtung (R) ausgebildet ist, um eine Höheninformation über die Gegenstandsoberfläche (3) aus vorzugsweise korrespondierenden Bildern der verschiedenen Kameras (K1,K2) und/oder aus mit verschiedenen Abständen beleuchteten Bildern der Gegenstandsoberfläche (3) zu berechnen.

14. Vorrichtung nach einem der Ansprüche 6 bis 13, **dadurch gekennzeichnet, dass** mindestens ein linienförmiges Beleuchtungselement (B1,B2) eine gekrümmte Form aufweist, wobei es vorzugsweise - entlang der Linienform gesehen - einen Winkelbereich von 0° bis 180° überstreicht, wobei das Beleuchtungselement (B1,B2) vorzugsweise die Form eines Halbkreisbogens oder einer Schraubenlinie aufweist.

15. Vorrichtung nach einem der Ansprüche 6 bis 14, **dadurch gekennzeichnet, dass** die Kamera (K) als Matrixkamera oder als Zeilenkamera ausgebildet ist, wobei die Kamera (K) bevorzugt eine integrierte, im Anwendungsfeld programmierbare Gatter-Anordnung umfasst, wobei die Kamera (K) insbesondere als Spezialkamera für ein Laserlichtschnittverfahren ausgebildet ist.

## Claims

1. Method for optical shape detection and/or examination of an item (G), comprising the following steps:

   - arranging at least one camera (K), at least one linear lighting element (B1, B2) and an item (G) relative to one another in such a way that an item surface (3) can be lighted by the at least one lighting element and captured by the camera (K);
   - effecting a relative movement at least between two elements selected from a group consisting of the item (G), the at least one lighting element (B1, B2) and the camera (K), a movement direction being at an angle other than 0° to the at least one lighting element (B1, B2);
   - capturing an image sequence (11) of the item surface (3) using the camera (K) during the relative movement, the item surface (3) being imaged in an image plane of the camera (K);
   - lighting the item surface (3) during exposure of the image plane using the at least one lighting element (B1, B2)

**characterised by**

- evaluating the captured image sequence (11) for local surface inclinations in two mutually orthogonally orientated directions,
- at least two linear lighting elements being used,
- the lighting elements (B1, B2) being at an angle other than 0° to one another,
- the movement direction being at an angle other than 0° to two lighting elements (B1, B2) of the at least two lighting elements (B1, B2),
- the item surface (3) being lighted during exposure of the image plane using at least one of the lighting elements (B1, B2),
- to distinguish the projections of the lighting elements (B1, B2) from one another

    a. a time-multiplexing method being carried out, or
    b. a colour-multiplexing method being carried out, or
    c. the lighting elements (B1, B2) being arranged in such a way that the point at which the lighting elements cross is positioned eccentrically, at the edge of at least one of the lighting elements and/or not in the region of a lighting line of a lighting element, or the lighting elements (B1, B2) being arranged mutually offset,

so that local surface inclinations are calculated in two mutually orthogonally orientated directions.

2. Method according to claim 1, **characterised by** the following steps:

- evaluating the captured image sequence (11) for local optical properties of the item surface (3), and/or
- assigning corresponding image locations (15) of maximum lighting intensity in the image plane to item locations (7) on the item surface (3) which are distinguishable in the image sequence (11), and
- calculating local surface inclinations at the item locations (7) from the position of the respectively corresponding image location (15) in the image plane.

3. Method according to either of the preceding claims, **characterised in that**

- in each individual image (13) of the image sequence (11) at least one image location (15) of maximum lighting intensity is determined, and is assigned to a corresponding item location (7), or **in that**

- the individual images (13) of the image sequence (11) are shifted back in the image plane in proportion to a time index (t) assigned to each of the individual images (13), in such a way that exactly one item location (7) is assigned to each shifted-back image location (15) in the shifted-back image sequence (19),
- a time index $(t_0)$, at which a lighting intensity at the shifted-back image location (15) assigned to the item location (7) in the shifted-back image sequence (19) is at a maximum, being preferably determined for an item location (7) which is held constant in the shifted-back image sequence (19), the corresponding image location (15) in the non-shifted-back image sequence (11) being determined from the time index $(t_0)$, the local surface inclination at the item location (7) being calculated from the position of the image location (15).

4. Method according to any of the preceding claims, **characterised in that**, from a lighting intensity distribution in the image plane - preferably at an image location (15) of maximum lighting intensity - a local optical property of the corresponding item location (7) is determined.

5. Method according to any of the preceding claims, **characterised in that**, from a level of lighting intensity - preferably at an image location (15) of maximum lighting intensity - in the image plane, a local optical property of the corresponding item location (7) is determined.

6. Device for optical shape detection and/or examination of an item (G) for carrying out a method according to any of claims 1 to 5, comprising

- at least one camera (K) and at least one linear lighting element (B1, B2), the camera (K) and the at least one lighting element (B1, B2) being arranged relative to one another in such a way that an item surface (3) can be lighted by the at least one lighting element (B1, B2) and captured by the camera (K),
- it being possible to capture an image sequence (11) of the item surface (3) using the camera (K) during a movement relative to one another of at least two elements selected from a group consisting of the item surface (3), the at least one lighting element (B1, B2) and the camera (K), in such a way that the item surface (3) is imaged in an image plane of the camera (K),
- the at least one lighting element (B1, B2) being actuable in such a way that the item surface (3) is lighted during the exposure of the image plane by the at least one lighting element (B1, B2),

**characterised by**

- a computation device (R) which is configured to evaluate the captured image sequence (11) for local surface inclinations in two mutually orthogonally orientated directions, and
- at least two linear lighting elements (B1, B2),
- the lighting elements (B1, B2) being arranged in such a way that they are at an angle other than 0° to one another,
- a movement direction of the relative movement being at an angle other than 0° to two lighting elements (B1, B2) of the at least two lighting elements (B1, B2),
- the lighting elements (B1, B2) being actuable in such a way that the item surface (3) is lighted during the exposure of the image plane at least by one of the at least two lighting elements (B1, B2), wherein
- to distinguish the projections of the lighting elements (B1, B2) from one another

    a. the lighting elements emitting spectral distributions differing from one another, and/or
    b. being actuable mutually temporally independently, or
    c. the lighting elements (B1, B2) being arranged in such a way that the point at which the lighting elements cross is positioned eccentrically, at the edge of at least one of the lighting elements and/or not in the region of a lighting line of a lighting element, or the lighting elements (B1, B2) being arranged mutually offset,

so that local surface inclinations are calculated in two mutually orthogonally orientated directions.

7. Device according to claim 6, **characterised in that**

- the computation device (R) is configured to evaluate the captured image sequence (11) for local optical properties of the item surface (3), and/or
- the computation device is set up to assign corresponding image locations (15) of maximum lighting intensity in the image plane to item locations (7) on the item surface (3) which are distinguishable in the image sequence (11), and to calculate local surface inclinations at the item locations (7) from the position of the respectively corresponding image location (15) in the image plane.

8. Device according to any of claims 6 to 7, **characterised by** a movement device (M) by means of which the relative movement can be effected along a movement direction at least between two elements selected from a group consisting of an item (G) which has the item surface (3), the at least one lighting element (B1, B2) and the camera (K), the movement device being configured and arranged relative to the at least two lighting elements (B1, B2) in such a way that the movement direction is at an angle other than 0° to two lighting elements (B1, B2) of the at least two lighting elements (B1, B2).

9. Device according to any of claims 6 to 8, **characterised in that**

- the at least one lighting element (B1, B2) has a diffuse, undirected emission characteristic, the emission characteristic preferably being a Lambert emission characteristic or a uniformly distributed emission characteristic, and/or in that
- the lighting elements (B1, B2) are at an angle to one another of from at least 1° to at most 179°, preferably 60°, preferably 90°, preferably 120°.

10. Device according to any of claims 6 to 9, **characterised in that** the movement direction divides the angle between the lighting elements (B1, B2), preferably forming a bisector of the angle between the lighting elements (B1, B2).

11. Device according to any of claims 6 to 10, **characterised in that** the lighting elements (B1, B2) emit spectral distributions differing from one another and/or **in that** the lighting elements (B1, B2) are actuable temporally independently of one another.

12. Device according to any of claims 6 to 11, **characterised in that** more than two linear lighting elements (B1, B2) are provided, the lighting elements (B1, B2) preferably being at different angles to the movement direction, are arranged differently from one another in such a way that they are at different distances from the item surface (3), and/or are shifted, preferably in the same plane, relative to one another.

13. Device according to any of claims 6 to 12, **characterised in that** at least two cameras (K1, K2) are provided and are arranged offset from one another, and/or **in that** at least three lighting elements (B1, B2) are arranged in such a way that a first and a second lighting element (B1, B2) are arranged together at a first distance from the item surface (3), a third lighting element being arranged at a second distance from the item surface (3), the first distance being different from the second distance, the calculation device (R) being configured to calculate a piece of height information relating to the item surface (3) from preferably corresponding images from the different cameras (K1, K2) and/or from images of the item surface (3) which are lighted from different distances.

14. Device according to any of claims 6 to 13, **characterised in that** at least one linear lighting element (B1, B2) has a curved shape, preferably spanning an angular range from 0° to 180° as considered along the line shape, the lighting element (B1, B2) preferably having the shape of a semi-circular arc or a helix.

15. Device according to any of claims 6 to 14, **characterised in that** the camera (K) is formed as a matrix camera or as a line-scan camera, the camera (K) preferably comprising an integrated grid arrangement which can be programmed in the field of application, the camera (K) in particular being formed as a special camera for a laser-light sectioning method.

**Revendications**

1. Procédé d'analyse optique de formes et/ou de vérification d'un objet (G), comportant des étapes suivantes :

   - agencement d'au moins une caméra (K), d'au moins un élément d'illumination linéaire (B1, B2) et d'un objet (G) relativement l'un à l'autre de sorte qu'une surface d'objet (3) peut être illuminée par l'au moins un élément d'illumination et peut être acquise par la caméra (K) ;
   - fourniture d'un mouvement relatif au moins entre deux éléments sélectionnés parmi un groupe constitué par l'objet (G), l'au moins un élément d'illumination (B1, B2) et la caméra (K), dans lequel une direction de mouvement forme un angle différent de 0° avec l'au moins un élément d'illumination (B1, B2) ;
   - acquisition d'une séquence d'images (11) de la surface d'objet (3) à l'aide de la caméra (K) au cours du mouvement relatif, dans lequel la surface d'objet (3) est visualisée dans un plan image de la caméra (K) ;
   - illumination de la surface d'objet (3) pendant l'exposition du plan image à l'aide de l'au moins un élément d'illumination (B1, B2),

   **caractérisé par**

   - un contrôle de la séquence d'images (11) acquise en regard d'inclinaisons locales de surfaces dans deux directions orthogonales l'une à l'autre, dans lequel
   - au moins deux éléments d'illumination linéaires sont utilisés, dans lequel
   - les éléments d'illumination (B1, B2) forment l'un avec l'autre un angle différent de 0°, dans lequel
   - la direction de déplacement forme avec deux éléments d'illumination (B1, B2) des au moins deux éléments d'illumination (B1, B2) an angle différent de 0°, dans lequel
   - la surface d'objet (3) est illuminée pendant l'exposition du plan image à l'aide de l'au moins un élément d'illumination (B1, B2), dans lequel
   - afin de différencier l'une par rapport à l'autre les images des éléments d'illumination (B1, B2)

      a. un procédé de multiplexage temporel est effectué, ou
      b. un procédé de multiplexage chromatique est effectué, ou
      c. les éléments d'illumination (B1, B2) sont agencés de telle sorte que le point auquel les éléments d'illumination se croisent est situé de manière excentrée au bord d'au moins un des éléments d'illumination et/ou n'est pas dans la zone d'une ligne d'illumination d'un élément d'illumination, ou dans lequel les éléments d'illumination (B1, B2) sont agencés en décalage l'un par rapport à l'autre, afin de calculer les inclinaisons locales de surface dans deux directions orthogonales l'une à l'autre.

2. Procédé selon la revendication 1, **caractérisé par** les étapes suivantes :

   - contrôle de la séquence d'images (11) acquise en regard de propriétés optiques locales de la surface d'objet (3), et/ou
   - attribution des positions d'image (15) de luminosité maximale correspondantes dans le plan image aux positions d'objet (7) sur la surface d'objet (3) différentiables dans la séquence d'images (11), et
   - calcul d'inclinaisons locales de surface sur la position d'objet (7) à partir de la position de la position d'image (15) correspondante dans le plan image.

3. Procédé selon l'une des revendications ci-dessus, **caractérisé en ce que**

   - dans chaque image unique (13) de la séquence d'images (11) au moins une position d'image (15) de luminosité maximale est déterminée, laquelle est attribuée à une position d'objet (7) correspondante, ou **en ce que**
   - l'image unique (13) de la séquence d'images (11) est redéplacée dans le plan image proportionnellement à un indice temporel (t) respectivement attribué à une des images uniques (13), de sorte qu'exactement une position d'objet (7) est attribuée à chaque position d'image (15) redéplacée dans la séquence d'images (19) redéplacée, dans lequel de préférence

- un indice temporel (t0) est déterminé dans la séquence d'images redéplacée (19) pour une position d'objet (7) fixée, lors duquel une luminosité à la position d'image (15) redéplacée, qui est attribuée à la position d'objet (7) dans la séquence image redéplacée (19), est maximale, dans lequel la position d'image (15) adéquate dans la séquence image non-redéplacée (11) est déterminée à partir de l'indice temporel (t0), dans lequel l'inclinaison locale de surface sur la position d'objet (7) est calculée à partir de la position de la position d'image (15).

4. Procédé selon l'une des revendications ci-dessus, **caractérisé en ce qu'**à partir d'une distribution de luminosités dans le plan image - de préférence autour d'une position d'image (15) de luminosité maximale - une propriété optique locale de la position d'objet (7) correspondante est déterminée.

5. Procédé selon l'une des revendications ci-dessus, **caractérisé en ce qu'**à partir d'une grandeur de luminosité dans le plan image - de préférence à une position d'image (15) de luminosité maximale - une propriété optique locale de la position d'objet (7) correspondante est déterminée.

6. Dispositif d'analyse optique de formes et/ou de vérification d'un objet (G) destiné à effectuer un procédé selon l'une des revendications 1 à 5, comportant

- d'au moins une caméra (K) et d'au moins un élément d'illumination linéaire (B1, B2), dans lequel la caméra (K) et l'au moins un élément d'illumination (B1, B2) sont agencés relativement l'un à l'autre de sorte qu'une surface d'objet (3) peut être illuminée par l'au moins un élément d'illumination et peut être acquise par la caméra (K), dans lequel
- une séquence image (11) de la surface d'objet (3) peut être capturée avec la caméra (K) pendant un mouvement relatif l'un par rapport à l'autre d'au moins deux éléments sélectionnés parmi un groupe constitué par la surface d'objet (3), de l'au moins un élément d'illumination (B1, B2) et de la caméra (K), de sorte que la surface d'objet (3) est visualisée dans un plan image de la caméra (K), dans lequel
- l'au moins un élément d'illumination (B1, B2) est pilotable de sorte que la surface d'objet (3) est illuminée pendant l'exposition du plan image à l'aide de l'au moins un élément d'illumination (B1, B2),

**caractérisé par**

- un dispositif de calcul (R), conçu pour contrôler la séquence d'images acquise (11) en regard d'inclinaisons locales de surfaces dans deux directions orthogonales l'une à l'autre, et au moins deux éléments d'illumination (B1, B2), dans lequel
- les éléments d'illumination (B1, B2) sont agencés de façon à former l'un avec l'autre un angle différent de 0°, dans lequel
- une direction de déplacement du déplacement relatif forme avec deux éléments d'illumination (B1, B2) des au moins deux éléments d'illumination (B1, B2) an angle différent de 0°, dans lequel
- les éléments d'illumination (B1, B2) sont pilotables de sorte que la surface d'objet (3) est illuminée pendant l'exposition du plan image à l'aide d'au moins un des au moins deux éléments d'illumination (B1, B2), dans lequel
- afin de différencier l'une par rapport à l'autre les images des éléments d'illumination (B1, B2)

    a. les éléments d'illumination émettent des distributions spectrales différentes l'une de l'autre, et/ou

    b. sont temporellement pilotables indépendamment l'un de l'autre, ou

    c. les éléments d'illumination (B1, B2) sont agencés de telle sorte que le point auquel les éléments d'illumination se croisent est situé de manière excentrée au bord d'au moins un des éléments d'illumination et/ou n'est pas dans la zone d'une ligne d'illumination d'un élément d'illumination, ou dans lequel les éléments d'illumination (B1, B2) sont agencés en décalage l'un par rapport à l'autre,

afin de calculer les inclinaisons locales de surface dans deux directions orthogonales l'une à l'autre.

7. Appareil selon la revendication 6, **caractérisé en ce que**

- le dispositif de calcul (R) est conçu pour contrôler la séquence image (11) acquise en regard de propriétés optiques locales de la surface d'objet (3), et/ou
- le dispositif de calcul est disposé pour l'attribution de positions d'images (15) de luminosité maximale correspondantes dans le plan image à des positions d'objet (7) sur la surface d'objet (3) différentiables dans la séquence image (11), et pour le calcul d'inclinaisons locales de surface sur la position d'objet (7) à partir de la position de la position d'image (15) correspondante dans le plan image.

8. Dispositif selon l'une des revendications 6 à 7, **caractérisé par** un dispositif de déplacement (M), grâce auquel le mouvement relatif le long d'une direction de déplacement d'au moins deux éléments sélectionnés parmi un groupe constitué par un objet (G), lequel comporte la surface d'objet (3), de l'au moins un élément d'illumination (B1, B2) et de la caméra (K) peut être effectué, dans lequel le dispositif de déplacement est conçu et agencé relativement aux au moins deux éléments d'illumination (B1, B2) de telle sorte que la direction de déplacement forme avec deux éléments d'illumination (B1, B2) des au moins deux éléments d'illumination (B1, B2) un angle différent de 0°.

9. Appareil selon l'une des revendications 6 à 8, **caractérisé en ce que**

   - l'au moins un élément d'illumination (B1, B2) comporte une caractéristique de rayonnement diffuse, omnidirectionnelle, dans lequel la caractéristique de rayonnement est de préférence une caractéristique de rayonnement lambertienne ou une caractéristique de rayonnement uniforme, et/ou **en ce que**
   - les éléments d'illumination (B1, B2) forment l'un avec l'autre un angle compris entre au moins 1° et au plus 179°, de préférence 60°, de préférence 90°, de préférence 120°.

10. Appareil selon l'une des revendications 6 à 9, **caractérisé en ce que** la direction de déplacement partage l'angle entre les éléments d'illumination (B1, B2), dans lequel elle forme de préférence une bissectrice par rapport à l'angle entre les éléments d'illumination (B1, B2).

11. Appareil selon l'une des revendications 6 à 10, **caractérisé en ce** les éléments d'illumination (B1, B2) rayonnent des distributions spectrales différentes l'une de l'autre, et/ou en ce les éléments d'illumination (B1, B2) sont temporellement pilotables indépendamment l'un de l'autre.

12. Appareil selon l'une des revendications 6 à 11, **caractérisé en ce que** plus de deux éléments d'illumination linéaires (B1, B2) sont prévus, dans lequel les éléments d'illumination (B1, B2) forment avec la direction de mouvement des angles de préférence différents, lesquels sont agencés différemment l'un de l'autre de telle sorte qu'ils comportent différents écarts par rapport à la surface de l'objet (3) et/ou sont déplacés relativement l'un par rapport à l'autre - de préférence dans le même plan.

13. Appareil selon l'une des revendications 6 à 12, **caractérisé en ce qu'**au moins deux caméras (K1, K2) sont prévues, agencées en décalage l'une par rapport à l'autre, et/ou **en ce qu'**au moins trois éléments d'illumination (B1, B2) sont agencés de telle sorte qu'un premier et un deuxième élément d'illumination (B1, B2) sont agencés avec un premier écart commun à la surface d'objet (3), dans lequel un troisième élément d'illumination est agencé avec un deuxième écart à la surface d'objet (3), dans lequel le premier écart diffère du second écart, dans lequel le dispositif de calcul (R) est conçu pour calculer une information de hauteur au-dessus de la surface d'objet (3) de préférence à partir des images correspondantes des différentes caméras (K1, K2) et/ou à partir des images de la surface d'objet (3) illuminées avec différents écarts.

14. Appareil selon l'une des revendications 6 à 13, **caractérisé en ce qu'**au moins un élément d'illumination linéaire (B1, B2) comporte une forme courbée, dans lequel il balaie de préférence - vu le long de la forme linéaire - un intervalle angulaire de 0° à 180°, dans lequel l'élément d'illumination (B1, B2) comporte de préférence la forme d'un arc de demi-cercle ou d'une hélice.

15. Appareil selon l'une des revendications 6 à 14, **caractérisé en ce que** la caméra (K) est conçue comme une caméra matricielle ou comme une caméra linéaire, dans lequel la caméra (K) comprend de préférence un arrangement de grille intégré programmable dans le champ d'application, dans lequel la caméra (K) est conçue en particulier comme caméra spéciale pour un procédé de nappe laser.

Fig. 1a)

Fig. 1b)

Fig. 2

Fig. 3

Fig. 4

11

$E_1 (x_1, y, t)$

13

15

17

Δx

Fig. 5

19

$E_2 (x_2, y, t)$

13

17

15

Fig. 6

Fig. 7a)

Fig. 7b)

Fig. 8a)

Fig. 8b)

Fig. 9a)

Fig. 9b)

I

21          21'

d

Fig. 10

B1        29        21'        21        29        B2

21                              21'

27                              27

25                              25'

23

25'

25        25'

Fig. 11

Fig. 12

EP 3 017 273 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1567827 A1

- DE 102005007715 A1